# EUROPEAN PATENT APPLICATION

(11) **EP 1 754 645 A1**
(43) Date of publication of application: **21.02.2007**
(21) Application number: 05748887.6
(22) Date of filing: 09.06.2005
(51) Int. Cl.: B62D 1/19, B60R 21/05, B62D 5/04

(54) **IMPACT ABSORBING STEERING COLUMN DEVICE AND ELECTRICALLY DRIVEN POWER STEERING DEVICE**

(30) Priority: 11.06.2004 JP 2004173383; 17.02.2005 JP 2005040056; 25.02.2005 JP 2005049880
(71) Applicant: NSK LTD., Shinagawa-ku, Tokyo 141-8560 (JP); NSK Steering Systems Co. Ltd, Shinagawa-ku, Tokyo 141-8560 (JP)
(72) Inventor: SADAKATA, Kiyoshi, Maebashi-shi, Gunma 3718528 (JP)
(74) Representative: Moreland, David
(86) International application number: PCT/JP2005/010618
(87) International publication number: WO 2005/120930

(57) **Abstract**

To realize a structure which can obtain at low cost, a structure with a high level of freedom of design, a collapse load which can be stabilized, and which can maintain flexural rigidity, engaging portions 14 having interference are provided at two location around the circumferential direction in an overlap portion 13 of an outer column 11 and an inner column 12. Moreover, the position of the overlap portion 13 and a bracket 16 for supporting a steering column 3 on a vehicle is matched in relation to the axial direction. Furthermore a welding part of the bracket 16 and the outer column 11 is positioned separated from the engaging portions 14.

## Description

### Technical Field

The present invention relates to a shock absorbing steering column apparatus that contracts its full length to protect a driver who collides with a steering wheel in the case of a collision accident, and to an electric power steering apparatus using the same.

### Background Art

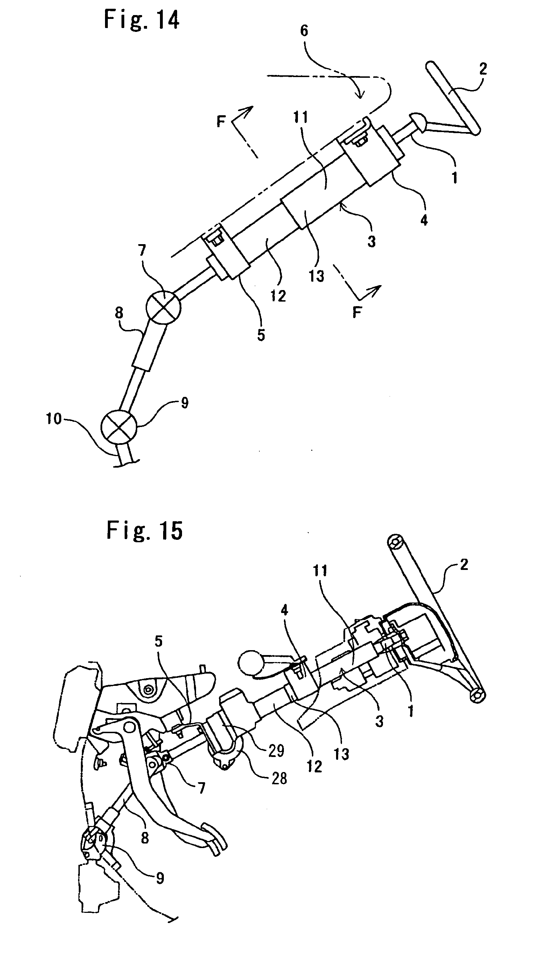

In a vehicle steering apparatus, a transmission mechanism as shown in FIG. 14 is used for transmitting a movement of a steering wheel to steering gears. As shown in FIG. 14, a steering wheel 2 is fixed on the rear end portion of a first steering shaft 1 (right end portion in FIG. 14). Moreover, a steering column 3 is fixed on a vehicle body under an instrument panel 6 by rear and front part brackets 4 and 5. The above first steering shaft 1 passes rotatably through the inside of the steering column 3. Furthermore, the part projecting from a front end aperture of the steering column 3 in the front end portion of the above first steering shaft 1 (left end portion in FIG. 14) is connected to the rear end portion of a second steering shaft 8 through a first universal joint 7. Furthermore, the front end portion of the second steering shaft 8 is connected to a third steering shaft 10, which links to a steering gear (not shown in the diagram), through a second universal joint 9.

Since the transmission mechanism of the vehicle steering apparatus is constructed as described above, movement of the above steering wheel 2 is transmitted to the steering gear through: the first steering shaft 1, which passes through the steering column 3; the first universal joint 7; the second steering shaft 8; the second universal joint 9; and the third steering shaft 10. Moreover, the steering gear gives wheels a steering angle corresponding to the movement of the steering wheel 2.

Furthermore, in order to reduce the force (steering force) required for turning the steering wheel 2 when changing the traveling route, a steering force assisting apparatus, called a power steering apparatus, is widely used. Moreover, for small vehicles such as a light vehicle, then an electric motor is generally used as a power source of the power steering apparatus as disclosed for example in the Patent Document 1 (Japanese Patent Application Publication No. Hei 11-171029). As shown in FIG. 15, such an electric power steering apparatus is provided with: a first steering shaft 1 to which a steering wheel 2 is fixed at the rear end; a steering column 3 through which the steering shaft 1 passes rotatably; and an electric motor 28, which gives the steering shaft 1 a rotation direction force when the power is on. When steering, the electric motor 28 gives the first steering shaft 1 an assistive torque through a reduction gear 29, such as a worm reducer, to achieve a reduction in steering force for turning the steering wheel 2.

Incidentally, in order to protect the driver in a collision, the vehicle steering apparatus constructed as described above is generally a shock absorbing type, in which the steering column 3 and each of steering shafts 1 and 8 contract their full lengths in the event of a collision. As a shock absorbing steering column apparatus that absorbs the shock when an impact occurs, by contracting the full length of the steering column 3, among these, there are for example, those disclosed in the Patent Documents 1 to 4 (Japanese Patent Application Publication No. Hei 11-171029, Japanese Patent Application Publication No. Sho 63-255171, Japanese Examined Utility Model Publication No. Hei 8-5095, and Japanese Patent Application Publication No. Hei 8-142885). Thus, as shown in FIG. 14, the conventionally known shock absorbing steering column apparatus is such that one end portion of an outer column 11 (left end portion in FIG. 14) and one end portion of an inner column 12 (right end portion in FIG. 14) are mutually engaged in a telescoping form. Moreover, when a large axial direction load is applied between the outer column 11 and the inner column 12, these outer column 11 and the inner column 12 are relatively displaced in the axial direction, allowing the steering column 3 to freely contract in the axial direction dimension.

Since the shock absorbing steering column apparatus described above is of a construction which absorbs shock by the contraction load (collapse load) when the outer column 11 and the inner column 12 are relatively displaced from each other, it is necessary that a stable collapse load be obtained. Specifically, as shown in FIG. 16, which is a construction disclosed in the Patent Document 2 among the above Patent Documents, in the state where the one end portion of the inner column 12 is inserted inside the one end portion of the outer column 11 which constitutes the steering column 3, a part where these outer column 11 and the inner column 12 overlap in the radial direction is an overlap portion 13. Moreover, since engaging portions 14 having interference are provided in parts around the circumferential direction in the overlap portion 13, the outer column 11 and the inner column 12 do not relatively displace from each other until a predetermined load acts on the steering column 3. Therefore, the size of the load (which is the collapse load) required for relative displacement of each of the outer column 11 and the inner column 12 is affected by the engaging status of the engaging portions 14 (for example, the size of the interference, the number and positions of the engaging portions and so forth) which constitute the overlap portion 13.

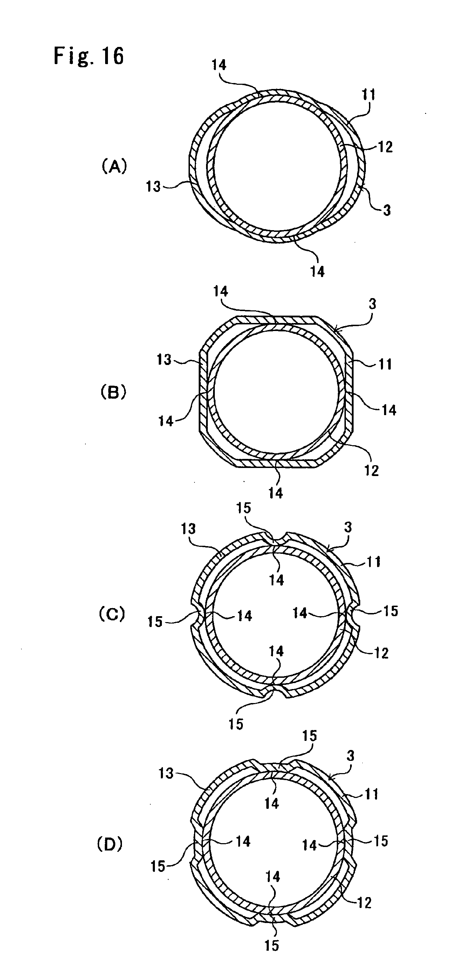

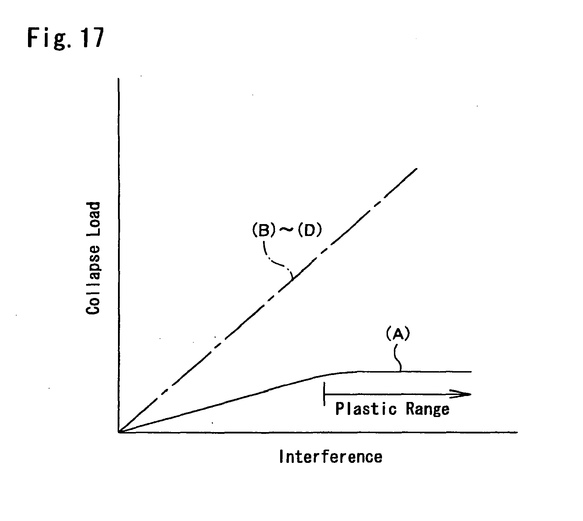

The effect of the engaging status of the engaging portions 14 on the collapse load is described, with reference to FIG. 17. In FIG. 17, the relationship between the interference of the engaging portions 14, and the collapse load in the case of FIG. 16 (A) is shown in a solid line, and the cases of (B) to (D) are each shown in a broken line. As is clearly seen from the illustration in FIG. 17, a proportion by which the collapse load becomes higher when the interference of the engaging portions 14 are increased, is higher in FIG. 16 (B) to (D) where the engaging portions 14 are evenly arranged in four positions around the circumferential direction, compared to in FIG. 16 (A), where the engaging portions 14 exist in two positions around the circumferential direction.

As described above, in the case of the constructions of FIG. 16 (B) to (D), the effect of changes in the interference of the engaging portions 14 on the collapse load becomes greater due to the following reason. Specifically, since the respective engaging portions 14 exist in vertical and horizontal directions in each diagram, when the interference of the respective engaging portions 14 changes, the effect of the change on deformation resistance when the outer column 11 is engaged with the inner column 12 is large. For example, in the case where the interference of the respective engaging portions 14 in the vertical direction among the above engaging portions 14 is too much larger than a preferred value, the outer column 11 does not elastically deform (does not bend) in the radial direction since the respective engaging portions 14 are also positioned in the horizontal direction. As a result, an increment of the interference of the respective engaging portions 14 in the vertical direction is hardly absorbed by the elastic deformation of the outer column 11, and it leads directly to an increase in the deformation resistance. In the case where the number of the engaging portions 14 is large and each of these engaging portions 14 is evenly arranged around the circumferential direction as seen in the structures in FIG. 16 (B) to (D), then as described above, since the interference of the respective engaging portions 14 directly affects the deformation resistance, the collapse load, which is determined by the deformation resistance, is also affected by the changes in the interference of the respective engaging portions 14.

In contrast to this, in the case of FIG. 16 (A), the engaging portions 14 are placed only in the vertical direction and not in the horizontal direction in the diagram. As a result, even if the magnitude of the interference of the respective engaging portions 14 is changed, the outer column 11 is likely to bend in the direction in which the vertical dimension increases in FIG. 16 (A). Therefore, if when the interference is made excessively larger than the preferred value, since the outer column 11 bends in the direction in which the vertical dimension increases in FIG. 16 (A), any increment in the interference of the respective engaging portions 14 is easily absorbed. As a result, the effect of changes in the interference of the respective engaging portions 14 on the deformation resistance is small, and variation of the collapse load due to the changes in the interference is suppressed.

Furthermore, the engaging portions 14 are respectively placed in four positions in FIG. 16 (B) to (D), but the shapes of these engaging portions 14 differ from each other. Specifically, in FIG. 16 (B), one part of one end portion of the outer column 11 has a polygonal shape, and flat faces which constitute this polygonal shape and the outer circumference surface of the inner column 12 are engaged in a state where there is interference, and these parts become the engaging portions 14. Moreover, in FIG. 16 (C), convex parts 15, which project in the radial inwards direction, are formed on an inner circumference surface of the one end portion of the outer column 11, and these convex parts 15 are engaged with the outer circumference surface of the inner column 12 in a state where there is interference, and these parts become the engaging portions 14. Moreover, in FIG. 16 (D), convex parts 15, whose tip end surfaces are formed in concave circular arc shapes, are formed on an inner circumference surface of the one end portion of the outer column 11, and the tip end surfaces of these convex parts 15 are engaged with the outer circumference surface of the inner column 12 in a state where there is interference, and these parts become the engaging portions 14. Thus, the numbers of the engaging portions 14 are the same in FIG. 16 (B) to (D). However, their shapes differ from each other. Accordingly, the shapes of the engaging portions 14 differ from each other in FIG. 16 (B) to (D). However, their affects on the collapse load are substantially the same as is clearly seen in FIG. 17.

As described above, the effect of changes in the interference on the collapse load is different depending on the number and positions of the respective engaging portions 14. Therefore, in the case where the effect of changes in the interference of the engaging portions 14 on the collapse load is large as is the case where the structures shown in FIG. 16 (B) to (D) are employed, when the interference of the respective engaging portions 14 changes slightly due to a slight dimensional error or so forth of the outer column 11 or the inner column 12, there is a possibility of a large variation in the collapse load. On the other hand, in order to protect the driver in the event of a collision, the collapse load needs to be stabilized and the steering column needs to be reliably contracted when a predetermined load acts due to the collision. In contrast to this, if the collapse load is likely to vary as described above, even when a load greater than the predetermined load acts, there is a possibility of the steering column not contracting, resulting in insufficient protection for the driver.

In order to stabilize the collapse load, stabilizing the degree of interference of the engaging portions 14 by improving the precision of the inner circumference surface of the outer column 11 and the outer circumference surface of the inner column 12, or reducing the friction resistance in contraction by placing a spacer or ball which easily slides in the overlap portion 13 as disclosed in the Patent Document 4, have been considered. However, in order to improve the precision of the outer column 11 and the inner column 12, the columns 11 and 12 respectively need to be drawn pipes, which have higher dimensional and formal precision, and which are more expensive compared to electric seam-welded pipe (the base pipe). Moreover, when a spacer or ball is placed in the overlap portion 13, the number of parts increases. As a result, the production cost increases.

On the other hand, in the cases of the structure shown in FIG. 15 as disclosed in Patent Document 1 or in Patent Document 4, a shock absorbing steering column apparatus is used in an electric power steering apparatus. However, when the shock absorbing steering column apparatus is used in an electric power steering apparatus like this, the following problem is observed. First of all, in the case of the structures disclosed in Patent Documents 1 and 2, as shown in FIG. 14, since the rear bracket 4 for supporting the steering column 3 on a vehicle is fixed in the position which is to the rear (right hand side in FIG. 14) of, and is distanced from, the overlap portion 13 of the outer column 11 and the inner column 12, a position in which an electric motor or a reduction gear that constitute the electric power steering apparatus can be provided, is limited. Specifically, depending on the position for providing these electric motor and reduction gear, there is a possibility of not ensuring a sufficient amount of contraction of the steering column 3 in the event of a collision. For example, in the case where the electric motor and so forth are provided between the front bracket 5 and the overlap portion 13, an amount of possible contraction of the steering column becomes considerably smaller. Therefore, in order to ensure a sufficient contraction amount of the steering column 3, the position for providing the electric motor and reduction gear becomes limited, and flexibility in designing decreases. In particular, in the case where the electric power steering apparatus is used for a small vehicle, since the installation space is narrow, a loss of flexibility in designing is not desirable.

Moreover, in the case of the structures disclosed in Patent Documents 1 and 4, the overlap portion of the outer column and the inner column, and the position for fixing the bracket for supporting the steering column on the vehicle body, are matched. That is to say, as shown in FIG. 15, the rear bracket 4 is fixed above the overlap portion 13 of the outer column 11 and the inner column 12. In the case of this structure, even in the case where an electric motor 28 and a reduction gear 29, which constitute the electric power steering apparatus, are installed, the contraction amount of the steering column 3 can be easily ensured, and the level of flexibility in designing can be improved. Specifically, since the position of the overlap portion 13 can be arranged to be closer to the rear end (closer to the right end in FIG. 15) by matching the positions of the rear bracket 4 and the overlap portion 13, then even when the electric motor 28 is provided between the overlap portion 13 and the bracket 5, the interval between the overlap portion 13 and the electric motor 28 can be made large. As a result, the distance for contraction of the steering column 3 can be ensured.

However, as described above, in the case of the structure in which the positions of the rear bracket 4 and the overlap portion 13 are matched, the following problem may be considered. Specifically, since the rear bracket 4 is normally fixed on the outer column 11 by means of welding, then in the case where the rear bracket 4 is fixed on the overlap portion 13, the overlap portion 13 of the outer column 11 may be deformed due to the welding in some cases. Moreover, in the case where the outer column 11 has been deformed due to welding, then depending on the relationship between the engaging portions 14 (refer to FIG. 16) of the overlap portion 13 and the position where the outer column 11 and the rear bracket 4 are welded, the collapse load is not stable and there is a possibility of insufficient driver protection in the event of a collision.

Moreover, in the case where the overlap portion 13 is partially deformed due to fixing the rear bracket on the overlap portion 13 of the outer column 11 and the inner column 12 by welding, a gap between the outer column 11 and the inner column 12 in the overlap portion 13, or the contacting status of the circumference surfaces of both columns 11 and 12 become unstable, and there is also a possibility of a decrease in flexural rigidity of the steering column 3. Furthermore, as described above, when the circumference surfaces of both columns 11 and 12 are subjected to reaming or milling in order to stabilize the collapse load by improving the precision of the outer column 11 and the inner column 12, the thicknesses of each of the columns 11 and 12 become thin in some cases. Accordingly, in the case where the thicknesses of each of the columns 11 and 12 becomes thin, the flexural rigidity of the steering column 3 also decreases. Moreover, in the case where the flexural rigidity of the steering column 3 is low, vibrations caused by driving on the road in bad conditions are transmitted to the steering wheel 2, and become a cause of discomfort for the driver.

Furthermore, the steering column 3 such as that described above is required to smoothly contract in the event of a collision, and it is required to have a high rigidity in order to support the steering wheel 2 when traveling normally. That is to say, it is required to be able to obtain a stable collapse load, and in order to suppress vibrations of the steering wheel 2 when traveling or idling, the engaging status of the engaging portions 14 of the outer column 11 and the inner column 12 is required to be made strong against vertical direction bending force in the assembled status (rigidity is required to be high). In order to make the engaging status of the respective engaging portions 14 strong against bending force, the interference of the respective engaging portions 14 needs to be made large to increase the engaging strength, or the engagement length of the respective engaging portions 14 needs to be made long. However, if the engaging strength of the respective engaging portions 14 is simply raised or the engagement length made longer, the collapse load of the steering column 3 increases and it becomes difficult to obtain a stable collapse load. Thus, it is difficult to make the engaging status of the respective engaging portions 14 strong against bending force, and to also stabilize the collapse load.

In particular, in the case of the column type electric power steering apparatus shown in FIG. 15, since parts such as the electric motor 28 and the reduction gear 29 are installed in one part of the steering column 3, the axial direction dimension of the steering column 3 becomes short, and the engagement length of the engaging portions 14 cannot be easily ensured. As a result; in the case of a column type electric power steering apparatus, it is difficult to make the engaging status of the engaging portions 14 strong against the bending force (difficult to increase flexural rigidity). Moreover, as described above, when the axial direction length of the steering column 3 is short, a sufficient length of contraction (collapse stroke) in the event of a collision cannot be easily ensured. Moreover, in the assembled state, the steering column 3 is installed in a state tilted in the vertical direction as shown in FIG. 14 and FIG. 15. As a result, at the time of a collision, the steering column 3 contracts, while a bending force in an upward direction acts on the steering wheel 2. Therefore, if the strength against the upward direction bending force (flexural rigidity) is insufficient, then at the time of a collision the respective engaging portions 14 may be twisted, and there is a possibility of the steering column 3 being unable to perform stable (smooth) contraction while the bending force is acting.

In order to ensure the strength of the engaging portions 14 against bending without having to ensure the axial direction length of the steering column 3, increasing the thickness of the outer column 11 and the inner column 12 may be considered. However, when the thickness has been increased in this way, changes in the collapse load with respect to changes in the interference of the engaging portions 14 become sensitive. That is to say, in the case where the thickness of each of the columns 11 and 12 has been increased, each of the columns 11 and 12 is unlikely to deform elastically with respect to changes in the interference, and the changes in the interference cannot be easily absorbed. Therefore, changes of the collapse load with respect to the changes in the interference become sensitive, and an appropriate collapse load cannot be obtained easily.

Furthermore, for achieving both an improvement in the strength of the steering column 3 against the bending force, and stabilization of the collapse load, techniques for performing low friction surface treatments such as metallic soap treatment either on the inner circumference surface of the outer column 11 or on the outer circumference surface of the inner column 12, are known. Specifically, when a surface treatment is carried out on either one of these circumference surfaces to reduce the friction of each of these circumference surfaces, an increase in collapse load can be suppressed while increasing the engaging strength or the engagement length of the engaging portions 14. However, when the surface treatment has been performed in this way, the production cost of the shock absorbing steering column becomes higher.

Moreover, as shown in FIG. 23 and disclosed in the Patent Document 10 for example, when the engaging portions 14 are arranged evenly around the circumferential direction, and the respective engaging portions 14 exist in more than four positions (eight positions in the example diagram), it is possible not to ensure sufficient strength against the bending force and not to sufficiently prevent vibrations. That is to say, when the number of the engaging portions is large, then in the case where the circularity of the inner column 12 (the outer column 11, in the case where the inner column 12 is deformed and engaged with the outer column 11) is defective, a difference emerges in the contact states (contact strength) of the respective engaging portions 14, and the strength against the bending force cannot be easily ensured. When the circularity of the outer column 11 and the inner column 12 are made excellent, such problems do not occur, however, the production cost naturally increases.
Patent Document 1: Japanese Patent Application Publication No. Hei 11-171029
Patent Document 2: Japanese Patent Application Publication No. Sho 63-255171
Patent Document 3: Japanese Examined Utility Model Publication No. Hei 8-5095
Patent Document 4: Japanese Patent Application Publication No. Hei 8-142885
Patent Document 5: Japanese Utility Model Application Publication No. Hei 6-65149
Patent Document 6: Japanese Utility Model Application Publication No. Hei 1-145771
Patent Document 7: Japanese Utility Model Application Publication No. Hei 1-145770
Patent Document 8: Japanese Utility Model Application Publication No. Sho 63-192181
Patent Document 9: Japanese Utility Model Application Publication No. Sho 62-6074
Patent Document 10: Japanese Patent Application Publication No. 2004-130849

### Disclosure of the Invention

### Problems to be Solved by the Invention

The shock absorbing steering column apparatus and electric power steering apparatus of the present invention has been invented in consideration of situations such as those mentioned above, with an objective of achieving at low cost, a structure with a high level of freedom of design, the collapse load of which can be stabilized, and which can maintain flexural rigidity.

Moreover, the shock absorbing steering column apparatus and electric power steering apparatus of the present invention has been invented in consideration of situations such as those mentioned above, with an objective of achieving at low cost, a structure by which a collapse load can be stabilized regardless of the interference of the engaging portions.

Furthermore, the shock absorbing steering column apparatus and electric power steering apparatus of the present invention has been invented in consideration of situations such as those mentioned above, with an objective of achieving at a low cost, a structure by which a collapse load can be stabilized, and strength against the bending force (flexural rigidity) can be maintained, regardless of error differences (changes) in the interference of the engaging portions.

### Means for Solving the Problem

In the shock absorbing steering column apparatus and electric power steering apparatus of the present invention, the shock absorbing steering column apparatus is provided with an outer column and an inner column.

Of these, one part of the outer column in the axial direction thereof is fixed by welding to a bracket, so that the outer column is supported on the vehicle body by means of this bracket.

Also, one end portion of the inner column is inserted into the inside of one end portion of the outer column.

Then, in the case where a large load in the axial direction is applied between the outer column and the inner column, their dimension in the axial direction is made contractible by means of a mutual shift in the relative positions of these outer column and inner column in the axial direction.

In particular, according to the shock absorbing steering column apparatus according to a first aspect of the present invention, engaging portions that have interference are provided in one part in the circumferential direction of an overlap portion where the outer column and the inner column overlap in the radial direction. Moreover, a position of the bracket is matched in relation to the axial direction with this overlap portion, and a welding place of this bracket and the outer column is in a position separated from the engaging portions of this overlap portion.

Moreover, according to the shock absorbing steering column apparatus according to a second aspect of the present invention, engaging portions that have interference are provided in a plurality of places around the circumferential direction of the overlap portion where the outer column and the inner column overlap in the radial direction. Moreover, in the case where this overlap portion is assumed to have been divided into two parts in the diametric direction, each of these engaging portions exists in a state biased towards a position away from this divided section (the part where the engaging portion becomes disconnected by dividing). Moreover, the position of the bracket is matched in the axial direction with this overlap portion, and the place where the bracket and the outer column are welded is on an engaging portion existing on one of the sides of the overlap portion, which is assumed to have been divided.

Here, matching the position of the bracket and the position of the overlap portion in the axial direction refers to a state in which at least one part in the axial direction of this bracket overlaps with respect to the radial direction, at least one part in the axial direction of the overlap portion.

Moreover, according to the shock absorbing steering column apparatus according to a third aspect of the present invention, engaging portions that have interference are provided in a plurality of places around the circumferential direction of the overlap portion where the outer column and the inner column overlap in the radial direction, and each of these engaging portions is arranged unevenly in relation to the circumferential direction.

Moreover, according to the shock absorbing steering column apparatus according to a fourth aspect of the present invention, engaging portions that have interference are provided in a plurality of places positioned at even intervals in relation to the circumferential direction, in the one part of the overlap portion where one end portion of the outer column and an end portion of the inner column overlap in the radial direction.

Furthermore, in the case of a shock absorbing steering column apparatus according to the fourth aspect, among the respective engaging portions, the interference of the engaging portions positioned in the vertical direction or positioned in the vicinity of the vertical direction in an installed state on a vehicle, is greater than the interference of the other engaging portions.

Also, in the case of a shock absorbing steering column apparatus according to a fifth aspect, among the respective engaging portions, the area of the engaging portions positioned in the vertical direction or positioned in the vicinity of the vertical direction in an installed state on a vehicle, is greater than the area of the other engaging portions.

Here, the vicinity of the vertical direction refers to the central position of the engaging portion being within a range of 10° in the circumferential direction from the vertical direction (within a total range of 20°).

Moreover, according to the shock absorbing steering column apparatus according to a sixth aspect of the present invention, engaging portions that each have interference are provided in a plurality of places positioned at even intervals in relation to the respective circumferential directions in two positions mutually separated in the axial direction in the overlap portion where one end portion of the outer column and an end portion of the inner column overlap in the radial direction. Furthermore, of each of these engaging portions, the areas of the engaging portions positioned in the part upon which the bending force acts at the time of a collision, are made greater than the areas of other engaging portions.

Furthermore, the electric power steering apparatus of the present invention is provided with: a steering shaft, on the rear end of which a steering wheel is fixed; a steering column through which this steering shaft can be freely inserted; and an electric motor that imparts a force to this steering shaft in a rotational direction according to the flow of current.

In particular, the electric power steering apparatus of the present invention includes the steering columns of the each of the above mentioned aspects, as the shock absorbing steering column apparatus.

### Effect of the Invention

In the case of the shock absorbing steering column apparatuses of the present invention respectively constructed as described above, any of them can achieve at low cost, a structure with a high level of freedom of design, the collapse load of which can be stabilized, and which can maintain flexural rigidity. Accordingly, if the collapse load can be stabilized, it is easy to set the optimal energy absorption at the time of a collision, and a highly safe shock absorbing steering column apparatus can be realized.

Also, in the case of the shock absorbing steering column apparatus of the present invention constructed as described above, a structure can be achieved at low cost, whereby the collapse load can be stabilized regardless of changes in the interference of the engaging portions. Specifically, by arranging the respective engaging portions unevenly, the effect of changes in the interference of the respective engaging portions on the collapse load can be made small. In other words, the change in the collapse load with respect to the variation in the interference of each of these engaging portions is desensitized. As a result, a stable collapse load can be achieved without increasing the precision of the interference of each of these engaging portions. Accordingly, if the collapse load can be stabilized without increasing the precision of the interference of the engaging portions, energy absorption at the time of a collision can be easily set optimally, and a high safety level shock absorbing steering column apparatus can be achieved at low cost.

Furthermore, in the case of a shock absorbing steering column apparatus of the present invention, constructed as described above, a structure can be achieved at low cost whereby the collapse load can be stabilized and strength against the bending force (flexural rigidity) can be maintained, regardless of changes in the interference of the engaging portions. That is to say, of the respective engaging portions, the interference or the area of the engaging portions positioned in or proximal to the vertical direction is larger or wider than the interference or the area of the other engaging portions, and therefore, the effect of changes in the interference of each of these engaging portions, imparted on the collapse load can be made small. In other words, with the interference or the area of the other engaging portions being smaller or narrower, error differences (changes) in the interference can be absorbed by these other engaging portions, and therefore, changes in the collapse load with respect to changes in the interference of each of these engaging portions becomes desensitized. As a result, a stable collapse load can be achieved without increasing the precision of the interference of each of these engaging portions. Also, because the interference or the area of the engaging portions positioned in or proximal to the vertical direction is larger or wider, strength against the bending force in the vertical direction can be maintained. Accordingly, if the collapse load can be stabilized, and the strength against the bending force in the vertical direction maintained, without increasing the precision of the interference of the engaging portions, a highly safe shock absorbing steering column apparatus, in which energy absorption at the time of a collision can be easily set optimally, and in which there are no uncomfortable vibrations during traveling, can be achieved at a low cost.

Furthermore, inside the overlap portion, of the engaging portions that are respectively disposed in two positions mutually separated in the axial direction, the area of the engaging portions positioned in the part upon which a bending force acts at the time of a collision is made larger than the area of other engaging portions, and therefore, the effect that a variation in the interference of each of these engaging portions imparts on the collapse load can be made small. Furthermore, the steering column becomes unlikely to be twisted by the bending force that acts at the time of a collision, and the contraction of this steering column can be performed stably (smoothly). Moreover, plastic deformation of each of the parts constituting the engaging portions, with respect to the load based on the bending force at the time of a collision also becomes unlikely, and a stable collapse load can be achieved.

Moreover, in the case of each of the inventions relating to these aspects, if the thicknesses of the outer column and the inner column that constitute the steering column are made larger, the strength of the column against the bending force can be made higher. In this case too, because the change of the collapse load with respect to the interference of the engaging portions is not sensitive, the collapse load can be stabilized regardless of changes in the interference of each of these engaging portions.

Furthermore, if the shock absorbing steering column apparatus of the present invention, having an effect such as that described above, is included in an electric power steering apparatus, the level of freedom of design can be improved, such as the welding position of the bracket being freely decided, and furthermore, a highly safe electric power steering apparatus can be obtained at low cost.

### Brief Description of the Drawings

FIG. 1 which is similar to FIG. 16, shows Example 1 of the present invention.
FIG. 2 is a sectional view of FIG. 1 taken along the line A-A.
FIG. 3 is similar to FIG. 1, and shows another shape of a bracket.
FIG. 4 is a side elevation of FIG 3, and shows another example of a welding method for the bracket and the outer column.
FIG. 5 is similar to FIG. 1, and shows Example 2 of the present invention.
FIG. 6 is a sectional view of FIG. 5 taken along the line B-B.
FIG. 7 is similar to FIG. 1, and shows Example 3 of the present invention.
FIG. 8 is a sectional view of FIG. 7 taken along line C-C.
FIG. 9 is similar to FIG. 1, and shows Example 4 of the present invention.
FIG. 10 is a sectional view of FIG. 9 taken along line D-D.
FIG. 11 similar to FIG. 1, and shows Example 5 of the present invention.
FIG. 12 is a sectional view of FIG. 11 taken along the line E-E.
FIG. 13 is similar to FIG. 1, and shows Example 6 of the present invention.
FIG. 14 is a side view showing an example of a steering mechanism that is an object of the present invention.
FIG. 15 is a side view showing an example of an electric power steering mechanism that is an object of the present invention.
FIG. 16 shows diagrams corresponding to sectional views of FIG. 14 taken along the line F-F, that show four examples of conventional structures of the overlap portion of an outer column and an inner column.
FIG. 17 is a graph showing a relationship between a change in interference of an engaging portion, and collapse load.
FIG. 18 is similar to FIG. 16, and shows Example 8 of the present invention.
FIG. 19 is a sectional view of FIG. 18 taken along the line H-H.
FIG. 20 is similar to FIG. 16, and shows Example 9 of the present invention.
FIG. 21 shows Example 10 of the present invention, wherein (A) corresponds to a sectional view of FIG. 19 taken along the line F-F, and (B) corresponds to a sectional view of FIG. 19 taken along the line G-G.
FIG. 22 is similar to FIG. 19, and shows Example 11 of the present invention.
FIG. 23 is similar to FIG. 16, and shows another example of a conventional structure of an overlap portion of an outer column and an inner column.
FIG. 24 is similar to FIG. 16, and shows Example 12 of the present invention.
FIG. 25 is similar to FIG. 16, and shows Example 13 of the present invention.
FIG. 26 is similar to FIG. 16, and shows Example 14 of the present invention.
FIG. 27 is similar to FIG. 16, and shows Example 15 of the present invention.
FIG. 28 is similar to FIG. 16, and shows Example 16 of the present invention.
FIG. 29 is a partial longitudinal sectional view of an outer column that shows Example 17 of the present invention.
FIG. 30 is a diagram corresponding to a sectional view of FIG. 24 taken along the line J-J that shows Example 18 of the present invention.
FIG. 31 is a sectional view of FIG. 30 taken along the line K-K.
FIG. 32 is a sectional view of FIG. 30 taken along the line L-L.

### Best Mode for Carrying out the Invention

In order to carry out the present invention according to the first aspect, the place where the bracket and the outer column are welded is, preferably, positioned furthest in the circumferential direction from the engaging portion of the overlap portion.

According to such a construction, an affect of deformation due to welding, on the engaging portion can be minimized, and changes in the collapse load can be further suppressed.

Alternatively, engaging portions that have interference are provided in a plurality of positions around the circumferential direction, in an overlap portion in which the outer column and the inner column overlap in the radial direction, and in the case where it is assumed that this overlap portion is divided into two in a diametric direction, each of these engaging portions exists in a state biased towards a position away from this divided section. Moreover, the place where the bracket and the outer column are welded, is in the vicinity of an engaging portion existing on one of the sides of the overlap portion which is assumed to have been divided.

According to such a construction, the affect of welding hardly reaches the engaging portion existing on the other side, and as a result, changes in the collapse load can be kept low.

Moreover, in order to carry out each of the inventions described above, more preferably, in relation to the overlap portion axial direction, each of these engaging portions is respectively provided in two places in relation to the circumference direction, in the part where the engaging portions exist, and each of these engaging portions is arranged in symmetry about the central axis of the outer column.

According to such a construction, the effect of changes of the interference of the respective engaging portions, on the collapse load can be made small.

Furthermore, in the second aspect, that is, in the case where the overlap portion is assumed to have been divided into two in the diametric direction, in order to execute the invention according to the aspect in which the respective engaging portions exist in a condition where they are biased to a position away from the divided section, preferably, the respective engaging portions exist unevenly in relation to the circumferential direction.

According to such a construction, narrow and wide intervals exist between the engaging portions around in the circumferential direction, and the outer column can easily deform elastically in the direction of the engaging portions that have narrow intervals. Therefore, the effect of changes in the interference of the respective engaging portions on the collapse load can be made small.

Specifically, in the case where the engaging portions exist in four places in relation to the circumferential direction, an interval in relation to the circumferential direction between engaging portions that exist astride an imaginary line orthogonal to the direction of division is made smaller than an interval in relation to the circumferential direction between engaging portions that exist astride an imaginary line in the direction of division.

Alternatively, in the case where the engaging portions exist in three places in relation the circumferential direction, two of these places are disposed on one side in the case where a division is assumed to have been made, astride an imaginary line orthogonal to the direction of division, and the other one place is disposed on the other side of the division on an imaginary line orthogonal to the direction of division. The interval in the circumferential direction between the engaging portions at the two places is made smaller than the respective intervals in the circumferential direction between the engaging portions in these two places and the engaging portion in the other one place.

Even more preferably, at least one member of the outer column and the inner column is a base pipe on which surface a finishing process has not been carried out.

According to this construction, the production cost can be made lower. In the case of the present invention, the outer column or the inner column can be kept as a base pipe in this way, because these outer column and the inner column do not have to be manufactured at a high level of precision to stabilize the collapse load.

In order to carry out the invention according to the third aspect, preferably, the interference of the respective engaging portions is made uneven.

According to such a construction, changes in the collapse load with respect to the interference of the respective engaging portions can be made more insensitive.

Furthermore, preferably, the arrangements of the respective engaging portions are biased in the vertical direction in an installed state.

Also, preferably, among the engaging portions, the interference of the engaging portions arranged in positions biased in the vertical direction in the assembled state is made larger than the interference of the engaging portions arranged in other positions.

According to such a construction, strength against bending in the vertical direction in an assembled state can be increased, and vibration of the steering wheel can be prevented when traveling. Specifically, in the case where the shock absorbing steering column apparatus is installed in a vehicle, in order to prevent vibration of the steering wheel, it is necessary to ensure strength against a bending force in the vertical direction. In the case of the present invention, by having the arrangement of the respective engaging portions biased in the vertical direction, or by making the interference of the engaging portions arranged in the vertically biased position large to enhance the strength against the bending force in the vertical direction, vibration of the steering wheel during traveling can be prevented. Moreover, if the strength against the bending force in the vertical direction is ensured, the steering column is unlikely to twist in the event of a collision, and the steering column can be contracted stably (smoothly). Furthermore, since in the case where such a shock absorbing steering column apparatus of the present invention is applied to an electric power steering column apparatus in which an axial direction dimension of the steering column cannot be easily ensured, the axial direction dimension of the engaging portion does not have to be made long to ensure strength against the bending force, and the axial direction dimension of the overlap portion can be made short. As a result, the collapse stroke can be ensured easily. Furthermore, if the thicknesses of the outer column and the inner column that constitute the steering column are made greater, the strength against the bending force can be further increased. In this case too, because the change of the collapse load with respect to the interference of the engaging portions is not sensitive, the collapse load can be stabilized regardless of changes in the interference of each of these engaging portions.

Also, in order to carry out the invention according to this aspect, preferably, the engaging portions positioned unevenly with respect to the circumferential direction respectively exist in positions separated in the axial direction of the overlap portion of the outer column and the inner column, and of each of these engaging portions, the number of engaging portions upon which the bending force acts at the time of a collision is made to be greater than the number of the other engaging portions.

Alternatively, of each of the engaging portions, the area of the engaging portions on which the bending force acts at the time of a collision is made greater than the area of the other engaging portions.

According to such a construction, since the surface pressure on the engaging portions upon which the bending force acts in the event of a collision can be made small, the steering column is not twisted easily in the event of a collision, and contraction of the steering column can be performed more stably (smoothly). Furthermore, with respect to the load based on the bending force in the event of a collision, plastic deformation of the part which constitutes the engaging portion is unlikely to occur. As a result, a stable collapse load can be obtained.

In this case, an axial direction dimension of the engaging portion on which the bending force acts at the time of a collision may be made greater than the axial direction dimension of the other engaging portions. In other words, by lengthening the axial direction dimension of the engaging portion, the area of the engaging portion can be made large.

According to such a construction, the strength against the bending force that acts at the time of a collision can be more easily ensured.

Furthermore, in order to carry out the invention according to this aspect, the respective engaging portions may be constructed by forming protrusions in a plurality of positions around the circumferential direction of the member of either one of the outer column and the inner column, and engaging these respective protrusions (convex parts) with the other member in a state having interference.

According to such a construction, the respective aspects of the invention described above, having structures in which the bias of the arrangement of the respective engaging portions, and the interference thereof can be changed by adjusting the positions for forming the respective protrusions and the height of the respective protrusions, can be carried out easily.

Moreover, a spacer manufactured from low friction material may be arranged between an inner circumference surface of the outer column and an outer circumference surface of the inner column, so that the respective engaging portions are engaged through the spacer.

Alternatively at least one of the circumference surfaces of the inner circumference surface of the outer column and the outer circumference surface of the inner column may be subjected to low friction surface treatment on the part where it engages with the other circumference surface.

According to such a construction, a more stable collapse load can be obtained in return for a slight increase in cost.

In order to carry out the invention according to the fifth aspect, an axial direction length dimension or a circumferential direction length dimension of the engaging portions positioned in the vertical direction or positioned in the vicinity of this vertical direction in the installed state on a vehicle, is made greater than the axial direction length dimension or the circumferential direction length dimension of the other engaging portions.

Also according to such a construction, the area of the engaging portions positioned in the vertical direction, or positioned in the vicinity of this vertical direction, in the installed state on a vehicle, can be made large, and strength against the bending force in the vertical direction can be increased. Furthermore, in the case where only the circumferential direction dimension is made large, since the strength against the bending force can be increased without having to make the axial direction dimension of the overlap portion greater, the collapse stroke can be ensured easily.

Furthermore, each of the aspects of the invention described above may be respectively appropriately combined to be carried out.

That is to say, in one of such embodiments, the area (axial direction dimension or circumferential direction dimension) of the engaging portions positioned in the vertical direction, or positioned in the vicinity of this vertical direction, in the installed state on a vehicle is made larger (greater), and the interference is made greater.

Moreover, in another embodiment, the interference or area (axial direction dimension or circumferential direction dimension) of the engaging portions positioned in the vertical direction, or positioned in the vicinity of this vertical direction, in the installed state on a vehicle, is made greater or larger, and also the area of the engaging portions positioned in the part upon which the bending force acts in the event of a collision is made larger. For example, of the engaging portions respectively provided in two positions distanced from each other in the axial direction, the interference of the engaging portions positioned in the vertical direction is made greater, and of these engaging portions positioned in the vertical direction, the area of the engaging portion positioned in the part on which the bending force acts in the event of a collision is made larger.

According to such a construction, a shock absorbing steering column apparatus can be obtained in which the strength against the bending force in the vertical direction can be made greater, and also deformation due to the bending force that acts in the event of a collision is unlikely to occur.

Furthermore, in order to carry out the invention according to the sixth aspect, an axial direction length dimension or a circumferential direction length dimension of the engaging portions positioned in the part upon which the bending force acts at the time of a collision, may be made greater. That is to say, by making the axial direction length dimension or the circumferential direction length dimension of the engaging portions greater, the area of the engaging portions can also be made larger.

Furthermore, in order to carry out the invention according to the fourth to sixth aspects, the respective engaging portions may be constructed by forming protrusions (convex parts), which project in the radial direction, in a plurality of positions around the circumferential direction of the member of either one of the outer column and the inner column, and engaging these respective protrusions with the other member in a state having interference.

According to such a construction, the respective aspects of the invention described above having structures in which the interference or area (axial direction dimension, circumferential direction dimension) of the respective engaging portions is changed by adjusting the positions for forming the respective protrusions and the height of the respective protrusions, can be carried out easily.

Moreover, a spacer manufactured from low friction material may be arranged between the inner circumference surface of the outer column and the outer circumference surface of the inner column, so that the respective engaging portions are engaged through the spacer.

Alternatively at least one of the circumference surfaces of the inner circumference surface of the outer column and the outer circumference surface of the inner column may be subjected to low friction surface treatment on the part where it engages with the other circumference surface.

According to such a construction, a more stable collapse load can be obtained in return for a slight increase in cost.

### Example 1

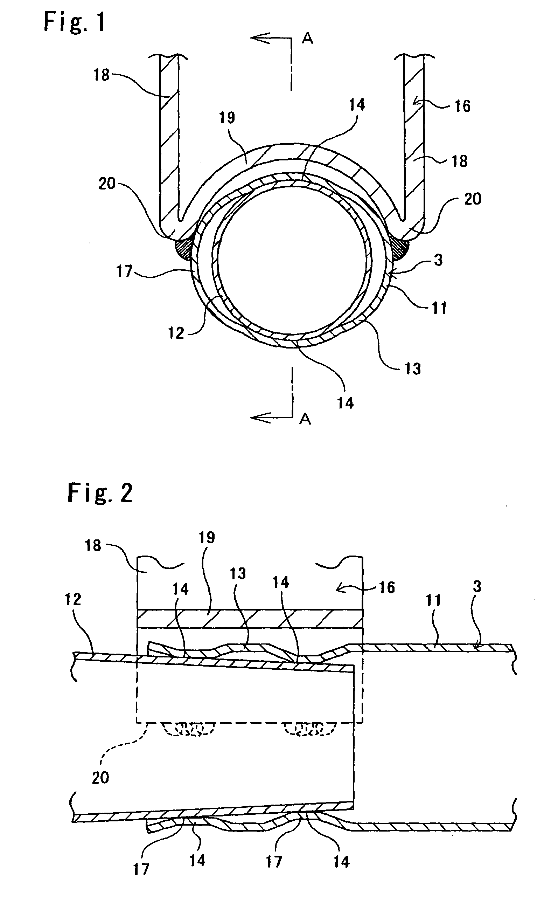

FIG. 1 and FIG. 2 show Example 1 of the present invention. The present invention is characterized in that, in order to enhance the flexibility in designing, even in the case where the position of a bracket 16 is matched in the axial direction (depth direction in FIG. 1, horizontal direction in FIG. 2) with an overlap portion 13, in which an outer column 11 and an inner column 12 overlap in a radial direction, a positional relationship between the welding place of the bracket 16 and the outer column 11 and engaging portions 14 existing at the overlap portion 13 is regulated in order to stabilize a collapse load. Since the other structures are equivalent to the conventional structure described above, duplicate description is omitted or simplified, and hereinafter the description focuses on the characteristic parts of the present invention.

In the case of the present example, the outer column 11 and the inner column 12, which constitute the steering column 3 that rotatably supports a steering shaft (not shown in the diagram) in the internal diameter side, are kept as electric seam-welded pipes (base pipes) which have not been subjected to surface finish treatment or drawing processing. As is the case shown in FIG. 16 (A) described above, oval portions 17 having substantially oval sectional shapes are formed by means of press working and the like, in two places separated in the axial direction on one end portion (left end portion in FIG. 2) of the outer column 11 that remains as a base pipe. The oval portions 17 may be provided in two or more places in the axial direction, or one oval portion 17 may be made long in the axial direction. Thus, if the oval portions 17 are provided in separate places in the axial direction, or the oval portion 17 is made long in the axial direction, then as described next, when one end portion of the inner column 12 (right end portion in FIG. 2) is engaged with one end portion of the outer column 11, the flexural rigidity of the steering column 3, which is constructed from the inner column 12 and the outer column 11, can be easily ensured.

Moreover, the outer circumference shape of one end portion of the inner column 12 is a cylindrical surface. The external diameter of one end portion of the inner column 12 is smaller than the length of the major axis part of the inner circumference surface of the oval portion 17, but it is larger than the length of the minor axis part. Furthermore, the outer column 11 and the inner column 12 constitute the overlap portion 13 in which one end portion of the outer column 11 and one end portion of the inner column 12 are overlapped in the radial direction by inserting one end portion of the inner column 12 inside one end portion of the outer column 11. Accordingly, in this state, the minor axis part of the oval portion 17 formed on one end portion of the outer column 11 is engaged with the outer circumference surface of one end portion of the inner column 12 with an interference. Then, these parts become the respective engaging portions 14. Therefore, the curvature of the respective engaging portions 14 is made to slightly differ from that of other parts in order to make them contact with the outer circumference surface of the inner column 12 over a wide area. Such engaging portions 14 exist in two places in the respective oval portions 17. Moreover, the respective engaging portions 14 existing in the respective oval portions 17 are arranged symmetrically about the central axis of the outer column 11. In the case of the present example, since the oval portions 17 of the outer column 11 have a shape squashed in the vertical direction in FIG. 1 and FIG. 2, the respective engaging portions 14 exist on both sides in the vertical direction in FIG. 1 and FIG. 2 and do not exist in the horizontal direction in FIG. 1 (depth direction in FIG. 2).

Furthermore, in the case of the present example, the position of the bracket 16 fixed to a vehicle (not shown in the diagram) is matched with the overlap portion 13 in the axial direction. The place where the bracket 16 and the outer column 11 are welded is positioned away from the respective engaging portions 14 in the circumferential direction. That is to say, the bracket 16 is provided with: support plate parts 18 arranged on either side in the horizontal direction (horizontal direction in FIG. 1, depth direction FIG. 2) of the outer column 11; a connection portion 19 that connects these support plate parts; and a bent portion 20 that respectively connects these support plate parts 18 and connection portion 19 in a continuous form. Moreover, a mounting plate part (not shown in the diagram), which is provided on the side of these support plate parts 18 opposite to the connection portion 19, is supported on the vehicle body. Furthermore, the bent portion 20 is positioned in a position away from the respective engaging portions 14 in the circumferential direction, on the major axis part most distant from the minor axis part of the oval portion 17 in which the respective engaging portions 14 exist, and the bent portion 20 and the outer circumference surface of the major axis part are fixed by means of welding. Therefore, in the case of the present example, as shown in FIG. 2, the places where the bracket 16 and the outer column 11 are welded exist in two places on both the left and right sides in FIG. 1 in the parts that match the oval portions 17 in the axial direction.

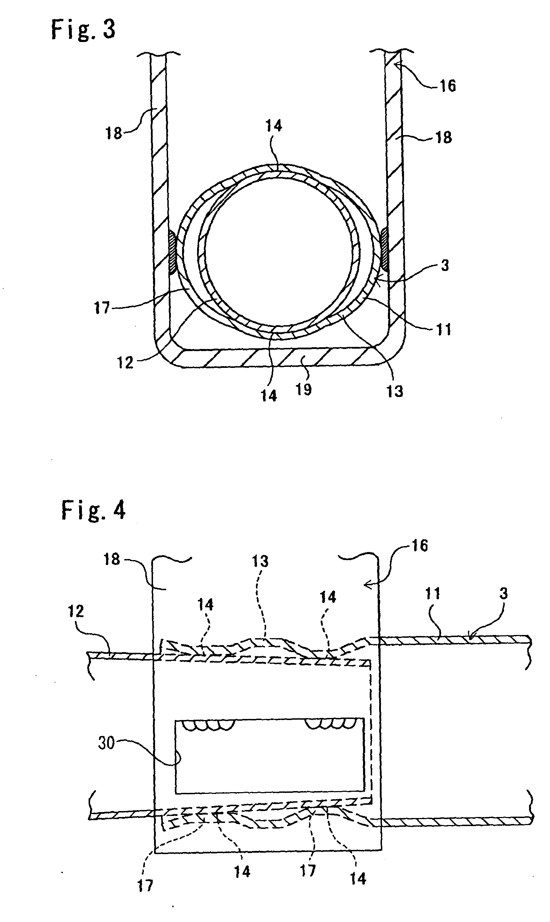

Moreover, the connection portion 19 is bent upwards in FIG. 1 and FIG. 2 to be arranged to straddle the outer circumference surface of the outer column 11. By contrast, as shown in FIG. 3, the connection portion 19 may be arranged under the outer column 11. In this case, the middle part of the support plate 18 and the outer circumference surface of the major axis part of the oval portion 17 may be welded, or alternatively, as shown in FIG. 4, a window hole 30 may be formed in the support plate part 18, and the upper side edge part of the periphery of the window hole 30 and the outer circumference surface of the major axis part may be welded. Moreover, the structure may be such that the engaging portions 14 are provided in the horizontal direction in FIG. 1 and FIG. 3, and the bracket 16 and the outer column 11 are welded in the vertical direction in FIG. 1 to FIG. 4.

The assembly operation of the shock absorbing steering column apparatus of the present example is carried out preferably by the following steps. First, the oval portions 17 are formed on the one end portion of the outer column 11. Next, the bracket 16 is fixed on the major axis part of these oval portions 17 on the one end portion of the outer column 11 by welding. Then, by inserting the one end portion of the inner column 12 inside the one end portion of the outer column 11 on which the bracket 16 has been fixed, and by having the inner circumference surfaces of the minor axis parts of the oval portions 17 engaged with the outer circumference surface of the one end portion of the inner column 12 (having them contacting each other with an interference), the shock absorbing steering column apparatus is achieved.

In the case of the shock absorbing steering column apparatus of the present example constructed as described above, since the positions of the bracket 16 and the overlap portion 13 match in the axial direction, a contraction amount in the axial direction dimension due to relative displacement in the axial direction of the outer column 11 and the inner column 12 can be easily ensured. As a result, flexibility in designing can be increased.

Moreover, since the place where the bracket 16 and the outer column 11 are welded is positioned away from the engaging portions 14 of the overlap portion 13 which have interference, the effect of deformation caused by welding on the respective engaging portions 14 can be kept small, and the collapse load of the steering column 3 can be stabilized. In particular, in the case of the present example, since the parts where the bracket 16 and the outer column 11 are welded are the major axis parts of the oval portion 17, which is most distanced from the respective engaging portions 14 in the circumferential direction in the overlap portion 13, the effect of deformation caused by welding on the respective engaging portions 14 can be minimized, and variation in the collapse load can be kept low.

Furthermore, as described above, since the outer column 11 is engaged with the inner column 12 by having one part in the axial direction of the one end portion of the outer column 11 as the oval portions 17, the respective engaging portions 14 exist in only two positions respectively in the circumferential direction in these respective oval portions 17. Therefore, as with the structure shown in FIG. 16 (A), as shown by the solid line (A) in FIG. 17, the effect of changes in the interference of the respective engaging portions 14 on the collapse load is small. Therefore, even if the interference of these respective engaging portions 14 changes, the variation of the collapse load can be kept low. Thus, if the collapse load can be stabilized, it is easy to set the optimal energy absorption at the time of a collision, and a highly safe shock absorbing steering column apparatus can be realized.

Moreover, in the case of the present example, even in the case where the interference of the respective engaging portions 14 is large and deformation occurs, the variation of the collapse load is small. That is to say, as shown in FIG. 17, in the case where the engaging portions 14 exist in two positions for each oval portion 17 (FIG. 16 (A), solid line in FIG. 17), even when the interference is large and plastic deformation occurs in each of these engaging portions 14, regardless of changes in the interference, the collapse load hardly changes. Thus, the collapse load does not change even in the case where plastic deformation occurs to the respective engaging portions 14, because the variation in the collapse load with respect to the changes in the interference of the respective engaging portions 14 is small (insensitive). On the other hand, as shown in FIG. 16 (B) to (D), in the case where the engaging portions 14 are positioned in four places around the circumferential direction, since variation in collapse load with respect to change in the interference of the respective engaging portions 14 is large (sensitive), then also in the case where plastic deformation occurs, the effect of changes in the interference on the collapse load becomes greater.

Moreover, in the case of the present example, as described above, since variation in collapse load with respect to changes in the interference of the engaging portions 14 is small, the collapse load can be stabilized without having to form the oval portion 17 at a high level of precision or to make the precision of the outer column 11 and the inner column 12 excellent. As a result, the base pipe used for each of the columns 11 and 12 do not require surface finish treatment or the like. Furthermore, spacers or balls do not have to be provided in the overlap portion 13 of the outer column 11 and the inner column 12. Therefore, an increase in the production cost for stabilizing the collapse load can be prevented. As a result, a shock absorbing steering column apparatus of stable collapse load can be produced at low cost.

Furthermore, in the case of the present example, the flexural rigidity of the steering column 3 can be easily ensured. That is to say, as described above, when the effect of deformation caused by welding, on the engaging portions 14 is small, welding is unlikely to make the gap between the outer column 11 and the inner column 12 and the contacting status of the circumference surfaces of these columns 11 and 12 unstable, and a reduction in flexural rigidity can be prevented. Moreover, since the precision of the outer column 11 and the inner column 12 does not have to be high in order to stabilize collapse load, the thicknesses of each of the columns 11 and 12 can be made greater, and flexural rigidity can be improved. Thus, if flexural rigidity of the steering column 3 is ensured, vibration caused by traveling on a rough road can be prevented from being transmitted to the steering wheel 2 (refer to FIG. 14 and 15).

### Example 2

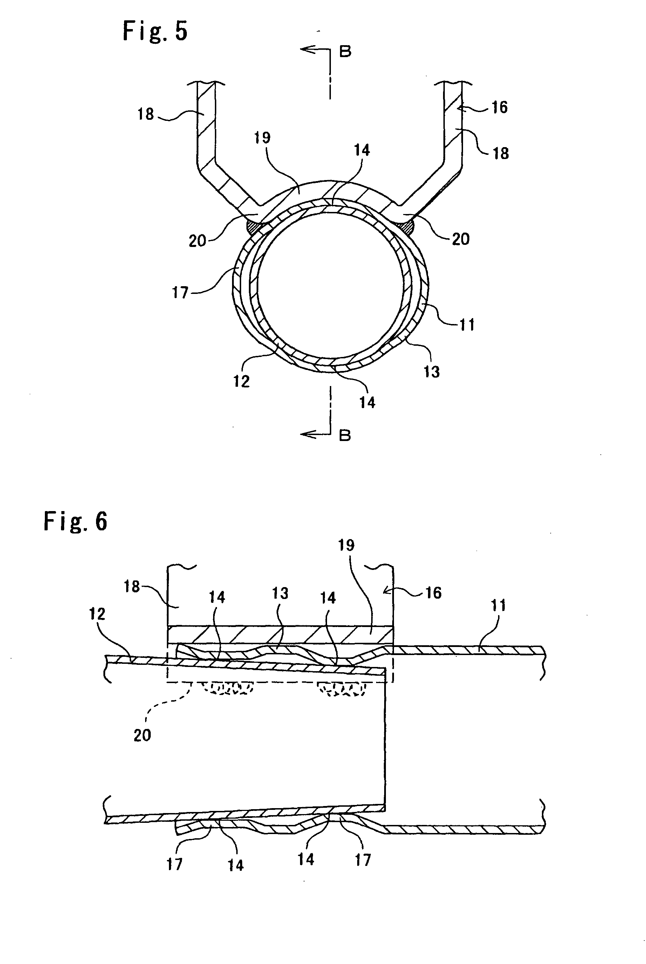

FIG. 5 and FIG. 6 show Example 2 of the present invention. In the case of the present example, the place where the bracket 16 and the outer column 11 are welded is in the vicinity of the engaging portion 14 on the upper side in the overlap portion 13 of the outer column 11 and the inner column 12 in FIG. 5 and FIG. 6. That is to say, also in the case of the present example, as with Example 1 described above, the oval portions 17 are formed in two places, which are distanced from each other in the axial direction, on one end portion (left end portion in FIG. 6) of the outer column 11. Then, in the state where one end portion of the inner column 12 (right end portion in FIG. 6) is inserted into the inside of the one end portion of the outer column 11, the minor axis part of each of the oval portions 17 is engaged with the outer circumference surface of the inner column 12 in a state having interference. Moreover, this part becomes the respective engaging portions 14. Furthermore, as shown in the diagram, each of these engaging portions 14 exist in the vertical direction (vertical direction in FIG. 5 and FIG. 6), and not in the horizontal direction (horizontal direction in FIG. 5, and depth direction in FIG. 6). In other words, when the overlap portion 13 is assumed to have been divided in a horizontal direction, the respective engaging portions 14 are biased in both the top side and bottom side parts, which are furthest from this divided part. In the case of the present example, the places where the bracket 16 and the outer column 11 are welded exist on both sides of the top side engaging portion 14 in the circumferential direction of the outer column 11.

To describe more specifically, the bracket 16 is such that the shape of a connection portion 19 that connects support plate parts 18 positioned on the right and left sides, is a shape having a radius of curvature substantially the same as the radius of curvature of the part that exists in the minor axis part of the oval portion 17 of the outer column 11 and that has a curvature that slightly differs from that of the other part. The horizontal width of the connection portion 19 having such a shape is made slightly larger than the width of the engaging portions 14 existing on the top side. Moreover, the support plate part 18 is inclined from the middle part to the bottom end portion towards the center of the outer column 11, and the bottom end portion thereof is connected to the both horizontal end portions of the connection portion 19 through a bent portion 20. Therefore, each of these bent portions 20 is positioned on both sides of the engaging portion 14 on the top side. Moreover, by means of welding each of the bent portions 20 and the both sides of the top side engaging portion 14, the outer column 11 and the bracket 16 are fixed.

In the case of the structure of the present example constructed as described above, since the respective engaging portions 14 exist only in the vertical direction and not in the horizontal direction, the outer column 11 bends easily in the direction in which the diameter in the direction in which the respective engaging portions 14 exist (in the vertical direction) changes. Therefore, as with the present example, when welding is carried out in the vicinity of the engaging portions 14 existing on the top side in the overlap portion 13, the deformation caused by this welding is easily absorbed by vertical bending, and the effect on the respective engaging portions 14 can be kept low. Moreover, since the deformation due to welding is unlikely to reach the engaging portion 14 existing on the bottom side, the engagement status of the inner circumference surface of the outer column 11 and the outer circumference surface of the inner column 12 at the engaging portion 14 on the bottom side is unlikely to change. As a result, even if welding is carried out in the vicinity of the engaging portions 14 on the top side, variation of the collapse load can be suppressed.

In the case of the present example, the engaging portions 14 on the welded side may be the engaging portions 14 on the bottom side. That is to say, the connection portion 19 of the bracket 16 is welded in the vicinity of the engaging portions 14 on the bottom side, and not welded in the vicinity of the top side engaging portions 14. Moreover, the construction may be such that the overlap portion 13 is hypothetically divided in the vertical direction, and the engaging portions 14 exist in the horizontal direction. In this case, the place where the bracket 16 and the outer column 11 are welded is in the vicinity of either one of the engaging portions 14 existing on both right and left sides. Even with such a structure, as in the case described above, the collapse load variation due to welding can be suppressed. Other structures and their effects are similar to that of example 1 described above.

### Example 3

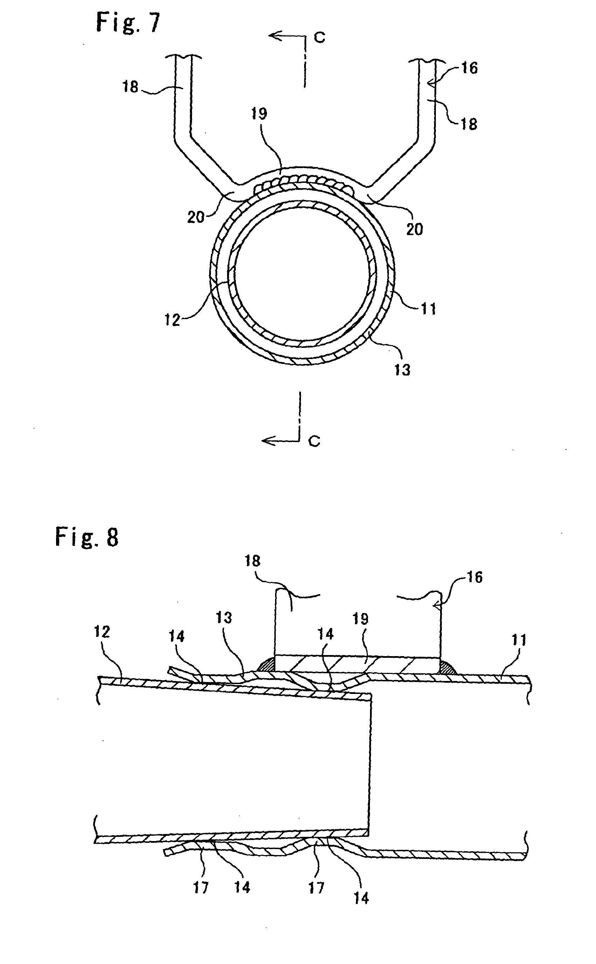

FIG. 7 and FIG. 8 show Example 3 of the present invention. In the case of the present example, the place where the bracket 16 and the outer column 11 are welded is positioned separated in the axial direction (depth direction in FIG. 7, horizontal direction in FIG. 8) from the engaging portion 14 on the upper side in the overlap portion 13 of the outer column 11 and the inner column 12 in FIG. 7 and FIG. 8. That is to say, also in the case of the present example, as with Example 1 described above, the oval portions 17 are formed in two places, which are distanced from each other in the axial direction, on one end portion (left end portion in FIG. 8) of the outer column 11. The respective engaging portions 14 are constructed by having the minor axis part of each of these oval portions 17 engaged with one end portion of the inner column 12 (right end portion in FIG. 8) with interference. Moreover, in the case of the present example, the shape of the connection portion 19 that connects the support plate parts 18 of the bracket 16 is a partially cylindrical shape which has a radius of curvature substantially the same as the radius of curvature of the outer circumference surface of the part in the one end portion of the outer column 11 excluding the oval portion 17 (the part in the same shape of the base pipe). The connection portion 19 is arranged on the upper side of the outer column 11, and one end portion (left end portion in FIG. 8) of the connection portion 19, and an intermediate part between the oval portions 17 are fixed on the upper side of the outer column 11 by means of welding. Furthermore, the other end portion of the connection portion 19 (right end portion in FIG. 8) is fixed in a position separated to the rear side (right hand side in FIG. 8) of the overlap portion 13 on the upper side of the outer column 11 by means of welding.

Also in the case of the present example constructed as described above, as with Example 2 described above, the place where the bracket 16 and the outer column 11 are welded exists in the vicinity of the engaging portions 14 on the upper side among the respective engaging portions 14 existing in the overlap portion 13, and it does not exist on the engaging portions 14 side on the bottom side. As a result, the effect of welding is unlikely to reach the engaging portions 14 on the bottom side. Moreover, also in the case of the present example, since the engaging portions 14, which exist in a single oval portion 17, are positioned in two places, the effect of the changes in the interference of the respective engaging portions 14 on the collapse load is small. As a result, in the case of the structure of the present example, variation in the collapse load caused by welding can be prevented. Other structures and effects are similar to Example 2 described above.

### Example 4

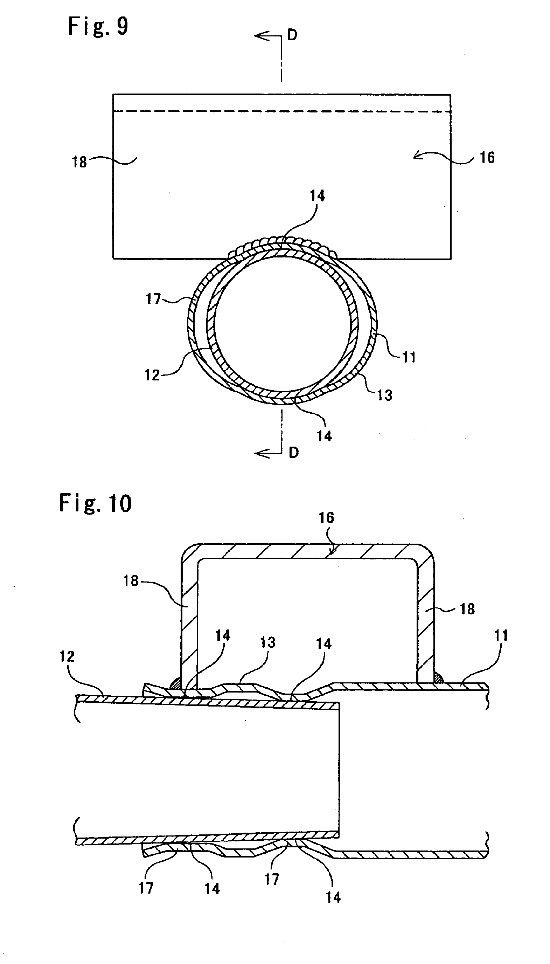

FIG. 9 and FIG. 10 show Example 4 of the present invention. In the case of the present example, one part of the place where the bracket 16 and the outer column 11 are welded is on one engaging portion 14 of the engaging portions 14 existing on the upper side in the overlap portion 13 of the outer column 11 and the inner column 12. That is to say, in the case of the present example, the bracket 16 is formed in an angular U shape, and the bottom end portions of the support plate parts 18 are respectively welded on the outer circumference surface of the outer column 11. One of the support plate parts 18 (left hand side in FIG. 10) is welded on the engaging portion 14 on the upper side of one of the oval portions 17 formed on the overlap portion 13. Moreover, the other support plate part 18 (right hand side in FIG. 10) is welded in a position separated from the overlap portion 13 on the outer circumference surface of the outer column 11. Furthermore, an arc shaped cutaway is formed in a shape similar respectively to the outer circumference surface of the engaging portion 14 or to the outer circumference surface of the outer column 11 distanced from the overlap portion 13, on the part which is the bottom end of the respective support plate parts 18, and is welded to the outer circumference surface of the outer column 11. As a result, by welding this cutaway part in the state where the cutaway part is contacting the corresponding outer circumference surfaces, this welding part, which is long in the circumferential direction of the outer column 11, can be ensured.

In the case of the present example constructed as described above, since one of the support plate parts 18 is welded on the engaging portion 14 on the upper side of one of the oval portions 17, it is possible for the engaging portion 14 on the upper side to deform so that the interference of the engaging portion 14 on the upper side changes. However, in the case of the present example, since the engaging portions 14 are positioned only in two places, even if the interference of the engaging portion 14 on the upper side changes, the effect on the collapse load is small. Moreover, since the welding part of the engaging portion 14 and the support plate parts 18 exists only on the upper side of the oval portion 17, the engagement status between the outer column 11 and the inner column 12 at the engaging portions 14 on the bottom side does not change as a result of welding. As a result, a certain degree of change in the collapse load can be prevented, but not as much as can be prevented in the respective examples described above. Other structures and effects are similar to Example 2 described above.

### Example 5

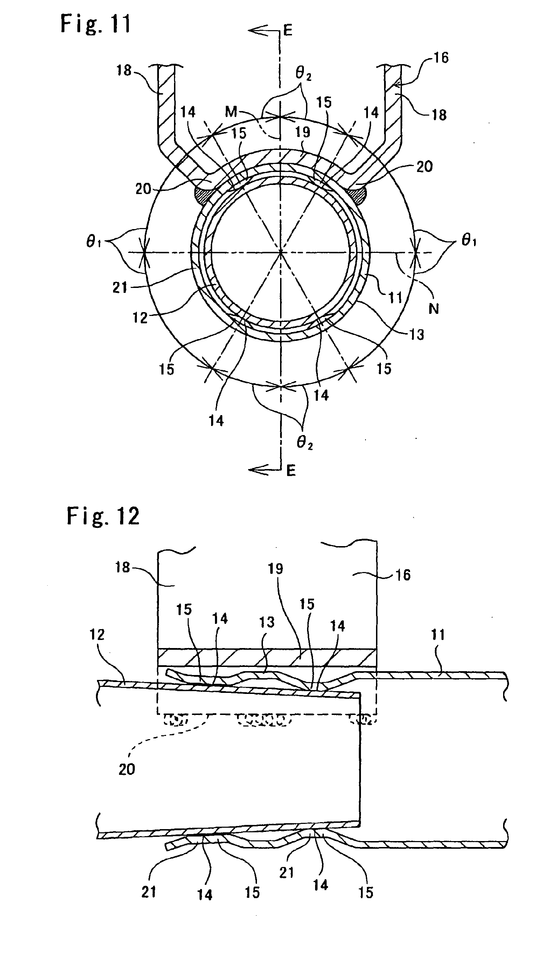

FIG. 11 and FIG. 12 show Example 5 of the present invention. In the case of the present example, deformed portions 21, on which convex parts 15 respectively projecting inward in the radial direction are formed, are provided in two places distanced in the axial direction on one end portion (left end portion in FIG. 12) of the outer column 11. Each of these convex parts 15 provided on each of the deformed portions 21 is formed in four places around the circumferential direction for a single deformed portion 21. Moreover, the shape of each of the convex parts 15 may be either one of the shapes shown in FIG. 16 (C) and (D). However, in the either one of the shapes shown in FIG. 16 (C) and (D). However, in the case of the present example, it has a shape equivalent to that of the convex part 15 shown in (C). Specifically, the shape of the top end surface of the convex part 15 is a convex arc shape.

Furthermore, the respective convex parts 15 are arranged around the circumferential direction in a state of being biased in the vertical direction of the outer column 11. That is to say, in the case where the overlap portion 13 of this outer column 11 and the inner column 12 is assumed to be divided into two by a dividing line N in the horizontal direction (corresponding to an imaginary line in the dividing direction), as shown in FIG. 11, an angle θ₁ between the dividing line N and each of the convex parts 15 differs from an angle θ₂ between a vertical imaginary line M orthogonal to the dividing line N and each of the convex parts 15. In the present example, the angle θ₁ is made greater than the angle θ₂ (θ₁ > θ₂). Accordingly, the respective convex parts 15 are provided in a state of being biased in a position away from the dividing line N in the horizontal direction. In other words, each of these convex parts 15 is unevenly arranged around the circumferential direction of the outer column 11. As a result, the outer column 11 tends to be easily deformed in a direction in which its sectional shape expands in the vertical direction.

In the case of the present example, since the convex parts 15 are provided on the outer column 11 as described above, the respective convex parts 15 engage with the outer circumference surface of the inner column 12 with interference in a state where one end portion (right end portion in FIG. 12) of the inner column 12 is inserted inside of one end portion of the outer column 11, and this part constitutes the engaging portion 14. Moreover, in the present example, since each of the convex parts 15 is provided in four places around the circumferential direction of the respective deformed portions 21, the respective engaging portions 14 exist in four positions for each of the deformed portions 21. Furthermore, each of these engaging portions 14 is arranged unevenly around the circumferential direction of the overlap portion 13. Specifically, each of these engaging portions 14 is arranged so that the interval in the circumferential direction between the engaging portions 14 existing on both sides of the imaginary line M becomes smaller than the interval in the circumferential direction between the engaging portions 14 existing on both sides of the dividing line N, and they exist in a condition biased in the vertical direction of the overlap portion 13.

Moreover, the place where the outer column 11 and the bracket 16 are welded is in the vicinity of the upper side engaging portions 14 on the outer circumference surface of the outer column 11. Specifically, the bent portion 20, which constitutes the bracket 16, is fixed in a position displaced from the respective convex parts 15 in the circumferential direction on the outer circumference surface of the outer column 11, by means of welding. In the case of the present example, the welding place is positioned closer to the side of the horizontal dividing line N than the respective convex parts 15. However, this welding place may be closer to the vertical imaginary line M. In short, the welding place only needs to be positioned in a position displaced from the respective convex parts 15 in the circumferential direction. Furthermore, in the case of the present example, in order to reduce a deformation effect caused by welding, on the upper side engaging portions 14, the welding place is displaced in the axial direction (horizontal direction in FIG. 12) with respect to the respective deformed portions 21. That is to say, the welding place is positioned at the intermediate part of the respective deformed portions 21, and to the front side (left hand side in FIG. 12) or the rear side (right hand side in FIG. 12) of the respective deformed portions 21. Moreover, in the present example, the welding place exists only on the upper part of the outer column 11, and does not exist on the lower side.

In the case of the present example constructed as described above, since the engaging portions 14 are positioned in four places for each of the deformed portions 21, then as with the respective examples described above, compared to the case where the engaging portions 14 are positioned in two places each, the effect of changes in the interference of the respective engaging portions 14 on collapse load is greater. However, in the case of the present example, by arranging the respective engaging portions 14 as described above, the outer column 11 is made to be easily deformed in a direction which changes the dimension in the vertical direction, being the direction where the narrow gaps between the respective engaging portions 14 exist. As a result, even if the interference of these respective engaging portions 14 changes, the changes in the interference are easily absorbed by elastic deformation of the cross-section of the outer column 11 in the direction in which the dimension in the vertical direction changes. Therefore, the effect of changes in the interference of the respective engaging portions 14 on collapse load can be suppressed. Moreover, since the place where the outer column 11 and the bracket 16 are welded exists only on the upper side of the outer column 11, the interference of the engaging portion 14 existing on the lower side of the outer column 11 is unlikely to be affected by welding. Accordingly, even if four of the engaging portions 14 exist in a single deformed portion 21, by employing the structure of the present example, changes in the interference of the respective engaging portions 14 caused by welding can be suppressed, and collapse load variation can be suppressed. Other structures and effects are similar to Example 2 described above.

### Example 6

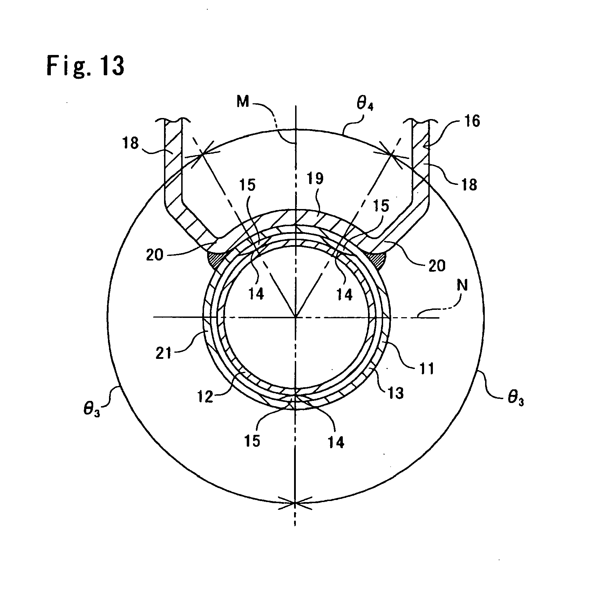

FIG. 13 shows Example 6 of the present invention. In the case of the present example, the convex parts 15 are formed in three places around the circumferential direction of a single deformed portion 21 of the outer column 11. Accordingly, in a state where one end portion of the inner column 12 is inserted inside of one end portion of the outer column 11, three of the engaging portions 14 exist in each of the deformed portions 21. Moreover, the respective engaging portions 14 exist in two places on the upper side and in one place on the lower side of the overlap portion 13 of the outer column 11 and the inner column 12. Furthermore, in the case where the angle between the lower side engaging portion 14 and the upper side engaging portion 14 is θ₃, and the angle between the upper side engaging portions 14 is θ₄, the intervals between the respective engaging portions 14 in the circumferential direction are made uneven in the circumferential direction by making the angle θ₃ related to the lower side engaging portion 14 greater than the angle θ₄ related to the upper side engaging portions 14 (θ₃ > θ₄). That is to say, the upper side engaging portion 14 exists in a position slightly tilted (by θ₄/2) in the circumferential direction from the vertical direction imaginary line M, and the lower side engaging portion 14 exists on the imaginary line M. In other words, two of the engaging portions 14 out of three are provided on both sides of the imaginary line M on the upper side in FIG. 13, and the other engaging portion 14 is provided on the imaginary line M on the lower side in FIG. 13. The interval in the circumferential direction between the two engaging portions 14 is made smaller than the respective intervals in the circumferential direction between these two engaging portions 14 and the other engaging portion 14.

In the case of the present example as well, the bracket 16 is fixed on the upper side of the outer column 11 by means of welding. Moreover, the welding place is in a position displaced in the circumferential direction and the axial direction from the upper side engaging portion 14. In the case of the present example, since three of the engaging portions 14 exist for each of the deformed portions 21, the effect of changes in the interference of the respective engaging portions 14 is considered to be smaller than in Example 4 described above. However, the basic structure and effect are equivalent to that in the Example 5.

### Example 7

The present example is Example 7 of the present invention. In the case of the present example, by incorporating the shock absorbing steering column apparatus of the respective examples constructed as described above into an electric power steering apparatus, a highly safe electric power steering apparatus having a high level designing flexibility can be obtained at low cost. That is to say, the structure of the present example is substantially the same as the structure shown in FIG. 15 described above. In particular, in the electric power steering apparatus of the present example, the steering column 3 (refer to FIG. 15) is a shock absorbing steering column apparatus having any one of the structures of the respective examples described above.

In the case of the electric power steering apparatus of the present example constructed as described above, since a position of a rear bracket 4 (corresponding to the bracket 16 shown in FIG. 1 to FIG. 13) is the same position as that of the overlap portion 13 of the outer column 11 and the inner column 12 which constitute the steering column 3, flexibility in designing the installation positions of an electric motor 28 and a reduction gear 29 can be enhanced. Moreover, even if the position of the rear bracket 4 is the same as the position of the overlap portion 13, safety can be ensured since collapse load variation can be suppressed. Detailed description of the structure of the electric power steering column apparatus is omitted because it is heretofore known as disclosed for example in Patent Documents 1 and 4.

### Example 8

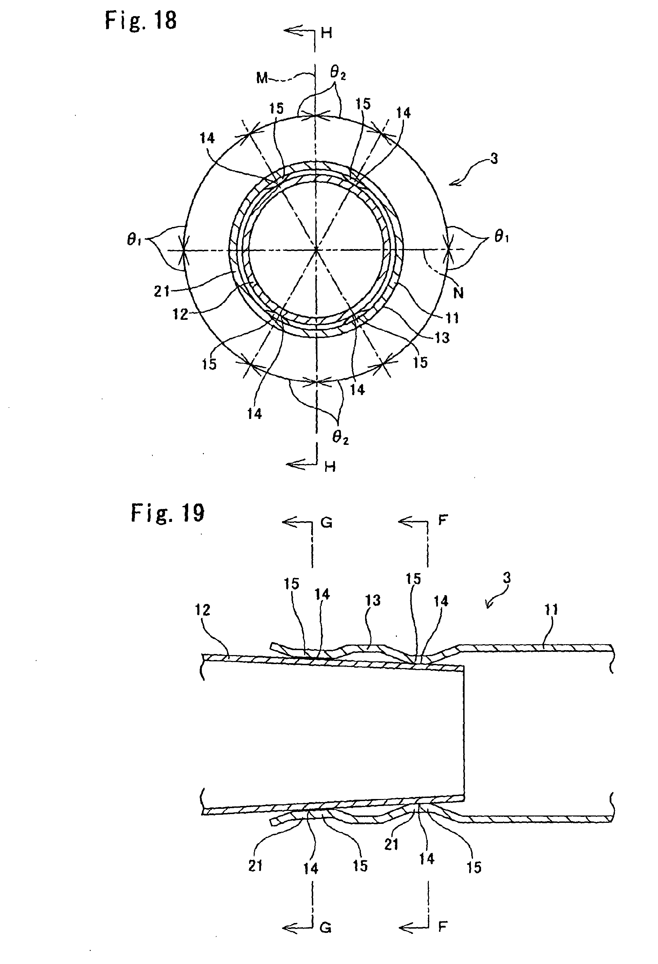

FIG. 18 and FIG. 19 show Example 8 of the present invention. The present invention is characterized in that the collapse load is stabilized (made not to change significantly) regardless of changes in the interference of the engaging portions 14 existing in the overlap portion 13 where the outer column 11 and the inner column 12 overlap in the radial direction, and the arrangement of the respective engaging portions 14 is devised so as to ensure strength (rigidity) with respect to bending force in the vertical direction in the installed state. Since the other structures are equivalent to the conventional structure described above, duplicate description is omitted or simplified, and hereinafter the description focuses on the characteristic parts of the present example.

In the case of the present example, the deformed portions 21, in which the protrusions 15 projecting in the inward radial direction are respectively formed, are provided in two places separated in the axial direction on one end portion (left end portion in FIG. 19) of the outer column 11 which constitutes the steering column 3 that rotatably supports the steering shaft (not shown in the diagram) on the internal diameter side. Each of these protrusions 15 provided on each of the deformed portions 21 is formed in four places around the circumferential direction for a single deformed portion 21. Moreover, the shape of each of the protrusions 15 may be any one of the shapes of the protrusions 15 shown in FIG. 16 (C) and (D). However, in the case of the present example, they have a shape equivalent to that of the protrusions 15 shown in (C). That is to say, the shape of the top end surface of the respective protrusions 15 is a convex arc shape. Moreover, the member that forms the respective protrusions 15 may exist on the side of the inner column 12 which constitutes the steering column 3. That is to say, these respective protrusions 15 may be formed on one end portion (right end portion in FIG. 19) of the inner column 12 so as to respectively project in the outward radial direction.

Furthermore, in the case of the present example, the respective protrusions 15 are arranged unevenly around the circumferential direction of the outer column 11. The arrangement of the respective protrusions 15 around the circumferential direction is positioned so as to be biased in the vertical direction in a state of installing the steering column 3 on the bottom surface of an instrument panel of a vehicle. That is to say, in the case where the overlap portion 13 of this outer column 11 and the inner column 12 is assumed to be divided into two by an imaginary line N in the horizontal direction (horizontal direction in FIG. 18), as shown in FIG. 18, the size of the angle θ₁ between the dividing line N and each of the protrusions 15 differs from that of the angle θ₂ between a vertical imaginary line M and each of the protrusions 15. In the present example, the angle θ₁ is made greater than the angle θ₂ (θ₁ > θ₂). As a result, the respective protrusions 15 are provided in a state of being biased to a position closer to the vertical imaginary line M.

In the case of the present example, since the protrusions 15 are provided on the outer column 11 as described above, the respective protrusions 15 engage with the outer circumference surface of the inner column 12 with an interference in the state where one end portion (right end portion in FIG. 19) of the inner column 12 is inserted inside of one end portion of the outer column 11, and this part constitutes the engaging portion 14. Moreover, in the present example, since each of the protrusions 15 is provided in four places around the circumferential direction of the respective deformed portions 21, the respective engaging portions 14 exist in four positions for each of the deformed portions 21.

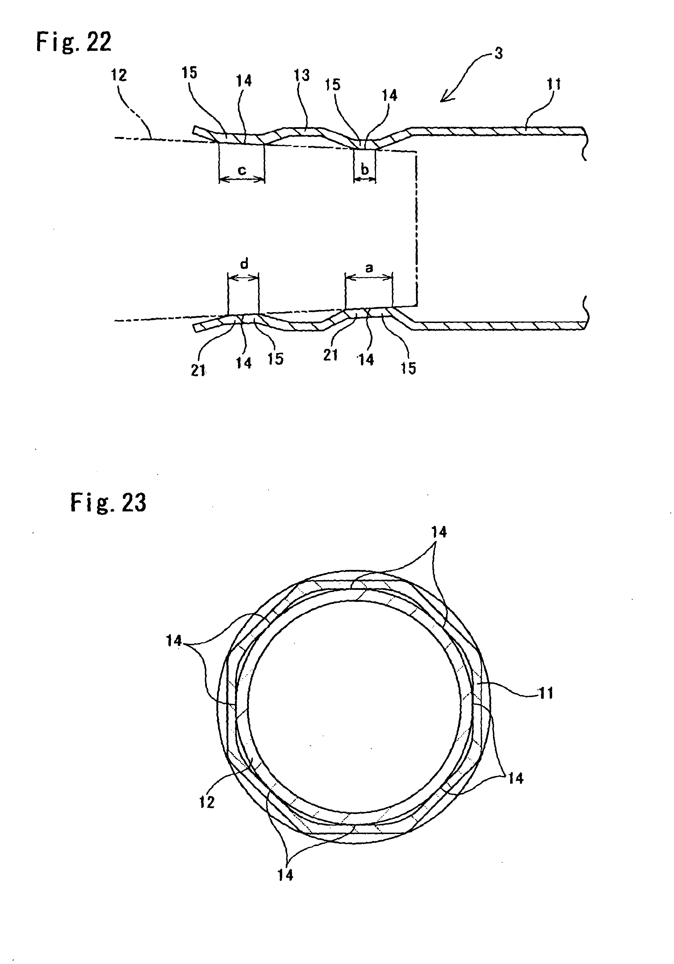

Furthermore, in the case of the present example, the respective engaging portions 14 are arranged unevenly around the circumferential direction of the overlap portion 13. Specifically, each of these engaging portions 14 is arranged so that the interval in the circumferential direction between the engaging portions 14 existing on both sides of the vertical imaginary line M becomes smaller than the interval in the circumferential direction between the engaging portions 14 existing on both sides of the horizontal imaginary line N, and they are biased in the vertical direction of the overlap portion 13. In the case of the present example, the respective engaging portions 14 are constructed by engaging the protrusions 15 formed on the outer column 11, with the inner column 12. However, as with the structure shown in FIG. 16 (A) and (B), or in FIG. 23, the cross-section shape of part of the outer column may have an oval or polygonal shape, and the engaging portions 14 may be constructed by engaging this part with the inner column.

In the case of the present example constructed as described above, regardless of changes in the interference of the engaging portions 14, the collapse load can be stabilized, and a structure which can easily ensure strength against vertical bending force in an installed state can be obtained at low cost. That is to say, by arranging the respective engaging portions 14 unevenly, the effect of changes in the interference of the respective engaging portions 14 on the collapse load can be made small. In other words, the variation in the collapse load with respect to changes in the interference of the respective engaging portions is desensitized. Hereinafter, this point is described in detail.

In the case of the present example, the arrangement of the respective engaging portions 14 is biased in the vertical direction. As a result, the outer column 11 can be easily deformed in the direction in which the dimension in the vertical direction changes. Therefore, even if the interference of these respective engaging portions 14 changes, the change in the interference is easily absorbed by elastic deformation of the cross-section of the outer column 11 in the direction where the vertical direction dimension changes. As a result, the effect of the changes in the interference of the respective engaging portions 14 on the collapse load is made small, and a stable collapse load can be obtained without improving the precision of the interference of the respective engaging portions 14.

Moreover, in the case where the steering column 3 is installed on a vehicle, in order to prevent vibration of the steering wheel 2 when traveling or idling (refer to FIG. 14 and FIG. 15), strength against the bending force in the vertical direction is required. In the case of the present example, since the arrangement of the respective engaging portions 14 is biased in the vertical direction, strength (supporting rigidity) against the bending force in the vertical direction can be ensured. As a result, when traveling or idling, vibrations can be prevented from being transmitted to the steering wheel 2. Furthermore, in the case of the present example, as shown in FIG. 19, since the respective engaging portions 14 of the deformed portions 21 in two positions separated in the axial direction are arranged to be respectively biased in the vertical direction, strength against the bending force in the vertical direction can be further increased. As a result, the steering column 3 does not easily bend at the time of a collision, and the steering column 3 can be contracted stably (smoothly).

Moreover, as described above, with an uneven arrangement of the respective engaging portions 14, even if the circularity precision of the inner column 12 to be engaged with the respective protrusions 15 is low, differences in the contact status of the respective engaging portions 14 are absorbed, and strength against bending can be ensured. As a result, even if circularity precision of the inner column 12 is low, a sufficient vibration prevention effect can be obtained. Thus, if vibration can be prevented and collapse load can be stabilized without increasing the precision of the interference of the respective engaging portions 14, or the circularity of the inner column 12 (or outer column 11), energy absorption at the time of a collision can be easily set optimally, and a highly safe shock absorbing steering column apparatus can be obtained at low cost.

Moreover, if the shock absorbing steering column apparatus of the present example is incorporated into the electric power steering apparatus shown in FIG. 15, a highly safe electric power steering apparatus can be obtained at low cost. Furthermore, since the axial direction length of the respective engaging portions 14 does not have to be made longer in order to ensure the strength against the bending force, the axial direction length of the overlap portion 13 is made short, and a collapse stroke can be easily ensured. Moreover, in the example shown in the diagram, a part internally engaged with the outer column 11 on the end portion of the inner column 12 has a tapered shape. However, this part may be formed in a simple cylindrical shape (the external diameter does not change in the axial direction).

### Example 9

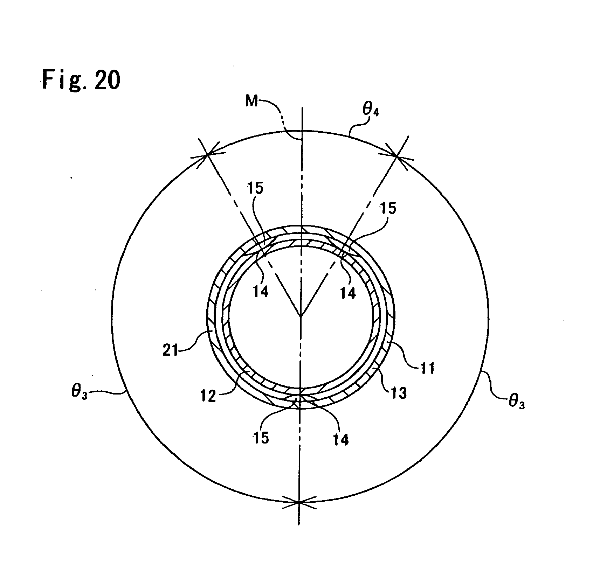

FIG. 20 shows Example 9 of the present invention. In the case of the present example, the protrusions 15 are formed in three places around the circumferential direction of a single deformed portion 21 of the outer column 11. Accordingly, in a state where one end portion of the inner column 12 is inserted inside of one end portion of the outer column 11, three of the engaging portions 14 exist in each of the deformed portions 21. Moreover, the respective engaging portions 14 exist in two places on the upper side in the assembled state and similarly in one place on the lower side, of the overlap portion 13 of the outer column 11 and the inner column 12.

Furthermore, in the case where the angle between the lower side engaging portion 14 and the upper side engaging portion 14 is θ₃, and the angle between the upper side engaging portions 14 is θ₄, the intervals between the respective engaging portions 14 in the circumferential direction are made uneven in the circumferential direction by making the angle θ₃ related to the lower side engaging portion 14 greater than the angle θ₄ related to the upper side engaging portions 14 (θ₃ > θ₄). That is to say, the upper side engaging portion 14 exists in a position slightly tilted (by θ₄/2) in the circumferential direction from the vertical direction imaginary line M, and the lower side engaging portion 14 exists on the imaginary line M. In other words, two of the engaging portions 14 out of three are provided on both sides of the imaginary line M on the upper side in FIG. 20, and the other engaging portion 14 is provided on the imaginary line M on the lower side in FIG. 20. The interval in the circumferential direction between the two engaging portions 14 is made smaller than the respective intervals in the circumferential direction between these two engaging portions 14 and the other engaging portion 14. Other structures and effects are similar to Example 8 described above.

### Example 10

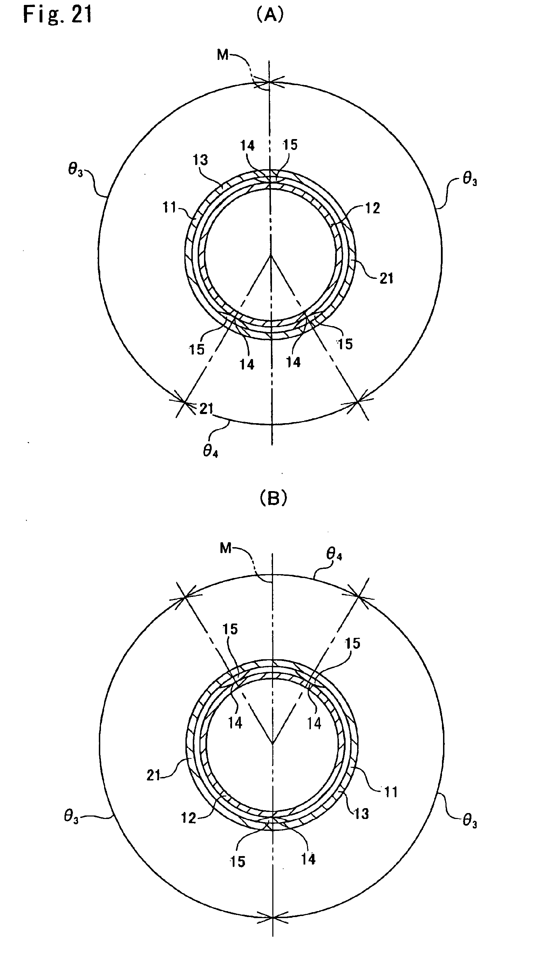

FIG. 21 shows Example 10 of the present invention. In the case of the present example, as in FIG. 19 showing Example 8 described above, the respective engaging portions 14, arranged unevenly around the circumferential direction, exist in positions separated in the axial direction on the overlap portion 13 of the outer column 11 and the inner column 12. Moreover, in the case of the present example, the steering wheel exists in the right direction in FIG. 19, and it is tilted in a direction that goes up going towards the right side in FIG. 19. As a result, the direction of a bending force caused by a secondary collision, which acts on the steering column, is a counterclockwise direction in FIG. 19 from the outer column 11 to the inner column 12. Furthermore, among the respective engaging portions 14, the engaging portions 14 existing on the part corresponding to the cross-section along the line F-F on the right hand side in FIG. 19 are arranged as shown in FIG. 21 (A). Meanwhile, the engaging portions 14 existing on the part corresponding to the cross-section along the line G-G on left hand side in FIG. 19 are arranged as shown in FIG. 21 (B).

That is to say, the engaging portions 14 existing on the part corresponding to the F-F cross-section are arranged in two positions on the lower side in FIG. 21 (A), and they are arranged only in one position on the upper side. Furthermore, the engaging portions 14 existing on the part corresponding to the G-G cross-section are arranged in two positions on the upper side in FIG. 21 (B), and they are arranged only in one position on the lower side. In the case of the present example, as described above, the bending force caused by a secondary collision acts in the counterclockwise direction in FIG. 19. Therefore, at the time of a collision, the bending force acts respectively on the lower side engaging portions 14 at the part corresponding to the F-F cross-section and on the top side engaging portions 14 at the part corresponding to the G-G cross-section. Therefore, in the case of the present example, by arranging the respective engaging portions 14 as described above, the number of the engaging portions 14 on which this bending force acts is increased. According to such a construction, since the surface pressure on the respective engaging portions 14 upon which the bending force acts in the event of a collision can be made small, the steering column is not deformed easily in the event of a collision, and contraction of the steering column can be performed more stably (smoothly). Furthermore, with respect to the load based on the bending force in the event of a collision, plastic deformation of the part which constitutes the engaging portion is unlikely to occur. As a result, a stable collapse load can be obtained.

In the structure described above, the outer column 11 is arranged on the right hand side (that is, the steering wheel side) in FIG. 19, and the inner column 12 is arranged on left hand side in FIG. 19. However, the reverse arrangement can also be carried out with the same structure. That is to say, it is assumed that the steering wheel exists on left hand side in FIG. 19 and that it is tilted in a direction that goes up going towards the left side in FIG. 19. In this case, the direction of the bending force caused by a secondary collision, which acts on the steering column, is a clockwise direction in FIG. 19 from the inner column 12 to the outer column 11. Therefore, this bending force acts respectively on the lower side engaging portions 14 at the part corresponding to the F-F cross-section on right side in FIG. 19, and the upper side engaging portions 14 at the part corresponding to the G-G cross-section on left side in FIG. 19. Therefore, as with the structure described above, when the part corresponding to the F-F cross-section in FIG. 19 has the structure shown in FIG. 21 (A) and the part corresponding to the G-G cross-section in FIG. 19 has the structure shown in FIG. 21 (B), the bending force can be sufficiently supported and the steering column is unlikely to be bent by this bending force. Other structures and effects are similar to Example 9 described above.

### Example 11

FIG. 22 shows Example 11 of the present invention. In the case of the present example, similarly to Example 10 described above, the respective engaging portions 14, arranged unevenly around the circumferential direction, exist in positions separated in the axial direction on the overlap portion 13 of the outer column 11 and the inner column 12. Moreover, in the case of the present example, the steering wheel exists in the right direction in FIG. 22, and it is tilted in a direction that goes up going towards the right side in FIG. 22. As a result, the direction of a bending force caused by a secondary collision, which acts on the steering column, is a counterclockwise direction in FIG. 22 from the outer column 11 to the inner column 12. Moreover, the arrangement of the respective engaging portions 14 in the circumferential direction is arranged unevenly as with Example 8 or Example 9 described above. In particular, in the case of the present example, among the engaging portions 14 existing on the right side in FIG. 22, an axial direction length a of the engaging portions 14 existing on the lower side is greater than an axial direction length b of the engaging portions 14 existing on the upper side (a > b). Moreover, among the engaging portions 14 existing on the left side in FIG. 22, an axial direction length c of the engaging portions 14 existing on the upper side is greater than an axial direction length d of the engaging portions 14 existing on the lower side (c > d).

For example, to describe using FIG. 18 showing Example 8 described above, in the case of the engaging portions 14 existing on right side in FIG. 22, the axial direction length of the engaging portions 14 existing on the lower side in FIG. 18 is made longer, and in the case of the engaging portions 14 existing on the left side in FIG. 22, the axial direction length of the engaging portions existing on the upper side in FIG. 18 is made longer. Moreover, in the case where the structure of the present example is applied to the structure of FIG. 20 showing Example 9 described above, it is preferable that the respective engaging portions 14 are arranged as with the structure of Example 10 shown in FIG. 21 described above, and the axial direction length of the engaging portions 14 on the lower side in FIG. 21 (A), and the axial direction length of the engaging portions 14 on the upper side in FIG. 21 (B) are respectively made longer. In the case of the present example, as described above, the bending force caused by a secondary collision acts in the counterclockwise direction in FIG. 22. As a result, at the time of a collision, the bending force acts respectively on the lower side engaging portion 14 at the right side part in FIG. 22, and on the upper side engaging portion 14 at the left side part in FIG. 22. Therefore, in the case of the present example, by regulating the axial direction lengths of the respective engaging portions 14 as described above, the axial direction lengths of the engaging portions 14 on which this bending force acts are increased. According to such a construction, since the surface pressure on the respective engaging portions 14 upon which the bending force acts in the event of a collision can be made small, the steering column is not deformed easily in the event of a collision, and contraction of the steering column can be performed more stably (smoothly).

In the structure described above, the outer column 11 is arranged on the right hand side (that is, the steering wheel side) in FIG. 22, and the inner column 12 is arranged on left hand side in FIG. 22. However, the reverse arrangement can also be carried out with the same structure. That is to say, it is assumed that the steering wheel exists on left hand side in FIG. 22 and that it is tilted in a direction that goes up going towards the left side in FIG. 22. In this case, the direction of the bending force caused by a secondary collision, which acts on the steering column, is a clockwise direction in FIG. 22 from the inner column 12 to the outer column 11. Therefore, this bending force acts respectively on the lower side engaging portions 14 at the right side part in FIG. 22, and the upper side engaging portions 14 at the left side part in FIG. 22. Therefore, as with the structure described above, if the axial length of the lower side engaging portions 14 at the right side part in FIG. 22, and the axial length of the upper side engaging portions 14 at the left side part in FIG. 22 are each made large, the bending force can be sufficiently supported and the steering column is unlikely to be bent by this bending force.

Furthermore, in the structure described above, strength against the bending force is made greater by making the axial direction length of the engaging portions 14, on which the bending force acts, longer. However, the circumferential direction length of the engaging portion 14 may be made greater. In short, if the area of the engaging portion, on which the bending force acts, is made greater, the strength against the bending force can be enhanced. Also, if the area of the engaging portions upon which the bending force acts is made greater, the parts constituting the engaging portions are unlikely to plastically deform under the load based on the bending force at the time of a collision, and variation of the collapse load can be suppressed. As a result, a stable collapse load can be obtained.

Other structures and effects are similar to Example 8 or Example 9 described above.

Moreover, in the case of the respective examples described above, the case where the arrangement of the respective engaging portions 14 is uneven has been described. However, the interference of these respective engaging portions 14 may also be made uneven. For example, in the case where a structure is given in which in one deformed portion 21, in addition to the engaging portions 14 in four places in FIG. 18 described above, engaging portions are also provided in two places in the horizontal direction so that there are six engaging portions in six places in total, then compared to the interference of the engaging portions in these two places in the horizontal direction, the interference of the engaging portions 14 arranged in the positions biased in the vertical direction are made greater. According also to such a construction, changes in the collapse load with respect to changes in the interference of the respective engaging portions 14 can be desensitized. Moreover, since the engaging portions 14 for which the interference is made greater are the engaging portions 14 arranged in positions biased in the vertical direction, the flexural rigidity in the vertical direction can be sufficiently improved.

Furthermore, spacers manufactured from low friction materials such as synthetic resin may be arranged between the inner circumference surface of the outer column 11 and the outer circumference surface of the inner column 12. That is to say, the spacers may be inserted in the overlap portion 13 of the outer column 11 and the inner column 12 to engage the respective engaging portions 14 of the overlap portion 13 through this low friction material. Alternatively, low friction surface treatment such as metallic soap treatment may be carried out at least on one of the circumference surfaces among the inner circumference surface of the outer column 11 and the outer circumference surface of the inner column 12, on the part where the one of the circumference surface engages with the other circumference surface, that is, the overlap portion 13. According to such a construction, a more stable collapse load can be obtained in return for a slight increase in cost.

### Example 12

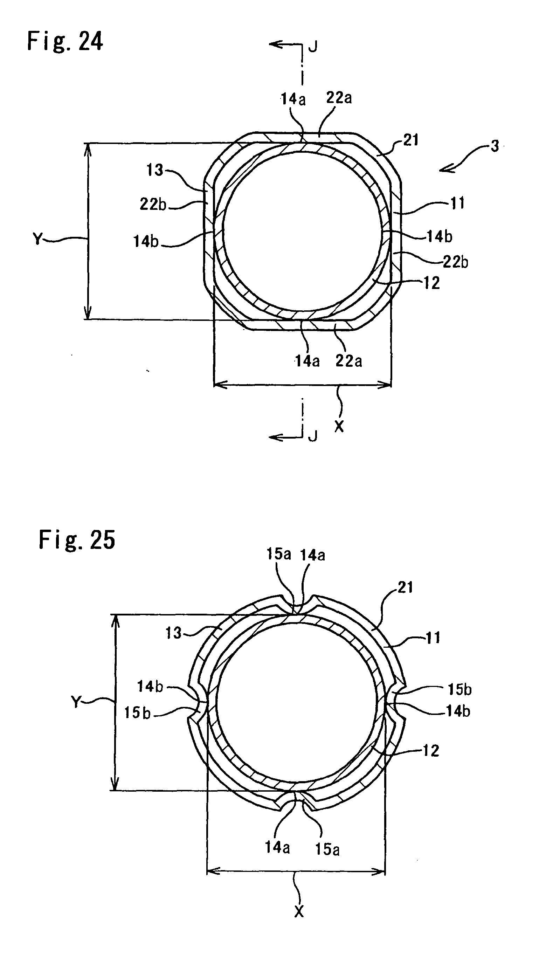

FIG. 24 show Example 12 of the present invention. The present invention is characterized in that the collapse load is stabilized (made not to change significantly) regardless of changes in the interference of engaging portions 14a and 14b, and in that the interference of the engaging portions 14a and 14b is controlled so as to ensure strength (rigidity) with respect to bending force in the vertical direction in the installed state in a vehicle. Since the other structures are equivalent to the conventional structure described above, duplicate description is omitted or simplified, and hereinafter the description focuses on the characteristic parts of the present example.

In the case of the present example, a structure is given in which the respective engaging portions 14a and 14b are provided at even intervals around the circumferential direction in one part of the overlap portion 13 in which one end portion of the outer column 11 and one end portion of the inner column 12 that respectively constitute the steering column 3 overlap. The interference of the engaging portions 14a existing in the vertical direction in the installed state on a vehicle is made greater than the interference of the engaging portions 14b existing in the horizontal direction in the same state. Therefore in the case of the present example, before the one end portion of the outer column 11 and the one end portion of the inner column 12 are engaged, the deformed portion 21 formed on the one end portion of the outer column 11, and having portions which engage with the one end portion of the inner column 12 by tightly fitting, has a dimension regulated as described below.

That is to say, in the case of the present example, the shape of the deformed portion 21 of the outer column 11 is a polygonal shape in which flat surface portions 22a and 22b whose opposing surfaces are parallel to each other, are provided in four places around the circumferential direction. Each of the flat surface portions 22a and 22b is engaged with the outer circumference surface of the one end portion of the inner column 12 with interference, and these parts become the respective engaging portions 14a and 14b. In the case of the present example in particular, in a state before the outer column 11 and the inner column 12 are engaged, an interval Y between the flat surface portions 22a positioned in the vertical direction in the installed state on a vehicle is made smaller than an interval X between the flat surface portions 22b positioned in the horizontal direction (Y < X) in the same state. Naturally, both X and Y are slightly smaller than the external diameter of the inner column 12. Meanwhile, the outer circumference surface of the inner column 12 is formed to have a cylindrical surface shape.

As a result, in a state where the deformed portion 21 of the outer column 11 is engaged with the outer circumference surface of the one end portion of the inner column 12, the interference of the engaging portion 14a positioned in the vertical direction becomes greater than the interference of the engaging portion 14b positioned in the horizontal direction. In the case of the present example constructed as described above, regardless of the interference of the respective engaging portions 14a and 14b, a structure, which can stabilize the collapse load and ensure strength with respect to the bending force in the vertical direction in the installed state on a vehicle (flexural rigidity), can be obtained at low cost. That is to say, among the respective engaging portions 14a and 14b, since the interference of the engaging portions 14a positioned in the vertical direction is made greater than the interference of the engaging portions 14b positioned in the horizontal direction, which constitute the other engine portions, the effect of the changes in the interference of the respective engaging portions 14a and 14b on the collapse load can be made small. In other words, variation of the collapse load with respect to changes in the interference of the respective engaging portions 14a and 14b is desensitized. Hereinafter, this point is described in detail.

In the case of the present example, among the respective engaging portions 14a and 14b, the interference of the engaging portion 14a positioned in the vertical direction in the installed state on a vehicle is made greater than the interference of the engaging portion 14b positioned in the horizontal direction in the same state. As a result, the outer column 11 can easily bend in the direction in which the dimension in the vertical direction changes. Therefore, even if the interference of these respective engaging portions 14a and 14b changes, the change in the interference is easily absorbed by elastic deformation of the cross-section of the outer column 11 in the direction where the vertical direction dimension changes. As a result, the effect of the changes in the interference of the respective engaging portions 14a and 14b on the collapse load is made small, and a stable collapse load can be obtained without improving the precision of the interference of the respective engaging portions 14a and 14b.

Moreover, in the case where the steering column 3 is installed on a vehicle, in order to prevent vibration of the steering wheel 2 when traveling or idling (refer to FIG. 14 and FIG. 15), strength against the bending force in the vertical direction is required. In the case of the present example, among the respective engaging portions 14a and 14b, since the interference of the engaging portions 14a positioned in the vertical direction is made greater, the strength against the bending force in the vertical direction (supporting rigidity) can be ensured. As a result, when traveling or idling, vibrations can be prevented from being transmitted to the steering wheel 2.

Furthermore, as described above, if the interference of the respective engaging portions 14a and 14b are made different between the engaging portions 14a in the vertical direction and in the engaging portions 14b in the horizontal direction, then even if the precision of the circularity of the inner column 12 that engages with each of the flat surface portions 22a and 22b is low, the differences in the contacting status of the respective engaging portions 14a and 14b are absorbed, and the strength against the bending force can be ensured. As a result, even if the precision of the circularity of the inner column 12 is low, a sufficient vibration prevention effect can be obtained. Thus, if vibration can be prevented and the collapse load can be stabilized without increasing the precision of the interference of the respective engaging portions 14a and 14b, or of the circularity of the inner column 12 (or of the outer column 11), energy absorption at the time of a collision can be easily set optimally, and a highly safe shock absorbing steering column apparatus can be obtained at low cost.

Moreover, if the shock absorbing steering column apparatus of the present example is incorporated into the electric power steering apparatus shown in FIG. 15, a highly safe electric power steering apparatus can be obtained at low cost. Furthermore, since the axial direction length of the respective engaging portions 14a and 14b does not have to be made longer in order to ensure the strength against the bending force, the axial direction length of the overlap portion 21 is made short, and a collapse stroke can be easily ensured.

### Example 13

FIG. 25 shows Example 13 of the present invention. In the case of the present example too, as with example 12 described above, a structure is given in which the engaging portions 14a and 14b are provided at even intervals around the circumferential direction in one part of the overlap portion 13 of one end portion of the outer column 11 and one end portion of the inner column 12. Moreover, among the respective engaging portions 14a and 14b, the interference of the engaging portions 14a positioned in the vertical direction in the installed state on a vehicle is made greater than the interference of the engaging portions 14b positioned in the horizontal direction in the same state. Therefore in the case of the present example, for each of the deformed portions 21 of the outer column 11, the extent of protrusion of the protrusions 15a and 15b formed in four places positioned at even intervals around the circumferential direction is regulated as described below. That is to say, each of these protrusions 15a and 15b are arranged at even intervals around the circumferential direction of the deformed portion 21, and project in the inward radial direction in two places in the vertical direction in the installed state on a vehicle, and in two places in the horizontal direction in the same state, and their top end surfaces are formed in convex arc shapes. The members that form the respective protrusions 15a and 15b may be on the inner column 12 side. That is to say, these respective protrusions 15a and 15b may be formed on one end portion of the inner column 12, so as to respectively project in the outward radial direction.

In particular, in the case of the present example, in a state before the one end portion of the outer column 11 is engaged with the one end portion of the inner column 12, among the respective protrusions 15a and 15b, the extent of protrusion of the protrusion 15a positioned in the vertical direction is made greater than the extent of protrusion of the protrusion 15b positioned in the horizontal direction. As a result, the interval Y between the protrusions 15a positioned in the vertical direction is smaller than the interval X between the protrusions 15b positioned in the horizontal direction (Y < X). In a state where the deformed portion 21 of the outer column 11 having the respective protrusions 15a and 15b formed as described above has been engaged with the one end portion of the inner column 12, the respective protrusions 15a and 15b are engaged with the one end portion of the inner column 12 with interference, thus constituting the respective engaging portions 14a and 14b. Moreover, as described above, since the extent to which the respective protrusions 15a and 15b project is regulated, among these respective engaging portions 14a and 14b, the interference of the engaging portions 14a positioned in the vertical direction in the installed state on a vehicle is greater than the interference of the engaging portions 14b positioned in the horizontal direction in the same state. Other structures and effects are similar to Example 12 described above.

### Example 14

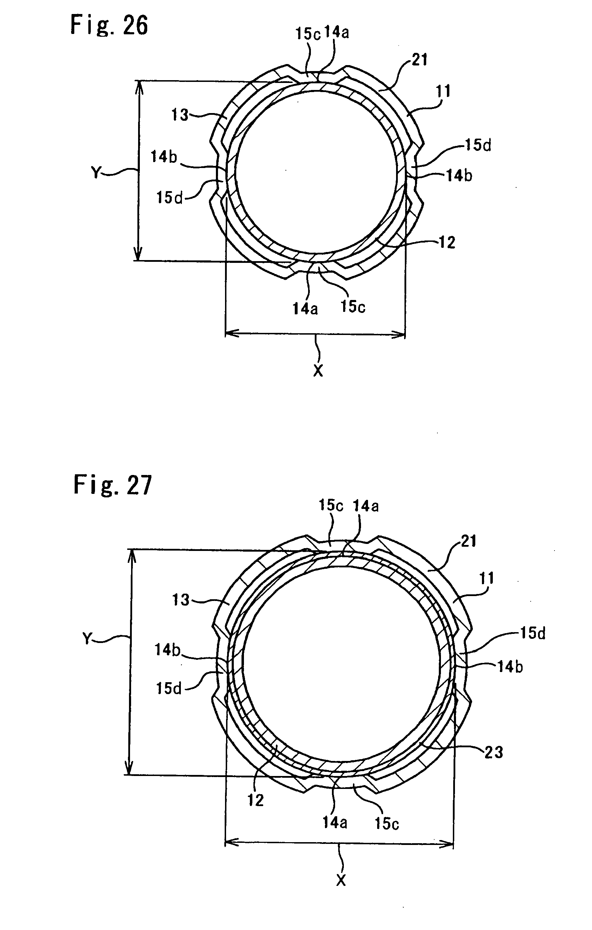

FIG. 26 shows Example 14 of the present invention. In the case of the present example, the top end portions of the protrusions 15c and 15d that constitute the engaging portions 14a and 14b are concave arc shaped. Therefore, in a state where one end portion of the outer column 11 has been engaged with one end portion of the inner column 12, the protrusions 15c and 15d formed on the deformed portion 21 of the outer column 11 are engaged with the outer circumference surface of the inner column 12 over a wide range in the circumferential direction (compared to the protrusions 15a and 15b in Example 13). Other structures and effects are similar to Example 13 described above.

### Example 15

FIG. 27 shows Example 15 of the present invention. In the case of the present example, a spacer 23 manufactured from a low friction material such as synthetic resin is arranged between the inner circumference surface of one end portion of the outer column 11 and the outer circumference surface of one end portion of the inner column 12. That is to say, the spacer 23 is inserted in the overlap portion 13 of the outer column 11 and the inner column 12, and the respective engaging portions 14a and 14b are engaged through the spacer 23. In the case of the present example constructed in this way, the production cost increases for the provision of the spacer 23. However, the collapse load can be obtained more stably. Moreover, instead of arranging the spacer 23, low friction surface treatment may be carried out at least on one of the circumference surfaces among the inner circumference surface of the outer column 11 and the outer circumference surface of the inner column 12, on the part where the one of the circumference surfaces engages with the other circumference surface, that is, the overlap portion 13. Other structures and effects are similar to example 14 described above.

### Example 16

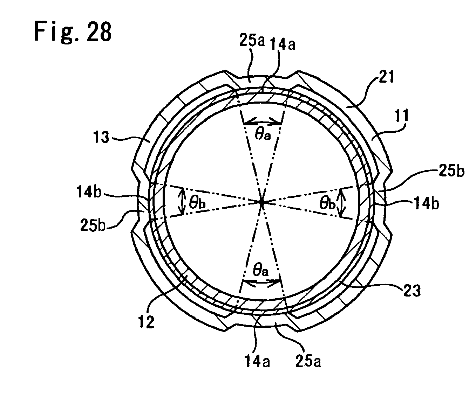

FIG. 28 shows Example 16 of the present invention. In the case of the present example, among the engaging portions 14a and 14b of the outer column 11 and the inner column 12, the circumferential direction length of the engaging portions 14a existing in the vertical direction in the installed state on a vehicle is made greater than for the engaging portions 14b existing in the horizontal direction in the same state. Specifically, protrusions 25a and 25b are formed in the inward radial direction in four places positioned at even intervals around the circumferential direction of the deformed portion 21 of the outer column 11. Moreover, these respective protrusions 25a and 25b are formed in pairs in a state where they respectively oppose each other in the vertical and horizontal directions of the deformed portion 21.

In particular, in the case of the present example, among the respective protrusions 25a and 25b, the circumferential direction length dimension of the protrusions 25a existing in the vertical direction is made greater than the circumferential direction length dimension of the protrusions 25b existing in the horizontal direction. As a result, angles θa and θb between imaginary lines which connect both circumferential direction end peripheries of the respective protrusions 25a, 25b and the center of the outer column 13 are regulated as follows. Specifically, the angle θa about the protrusions 25a existing in the vertical direction is made greater than the angle θb about the protrusions 25b existing in the horizontal direction (θa > θb). Moreover, in the case of the present example, a spacer 23 manufactured from low friction materials such as synthetic resin is arranged between the inner circumference surface of one end portion of the outer column 11 and the outer circumference surface of one end portion of the inner column 12, and the respective engaging portions 14a and 14b are engaged through this spacer 23.

In the case of the present example constructed as described above, since the circumferential direction length dimension of the engaging portions 14a existing in the vertical direction is made greater than the circumferential direction length dimension of the engaging portions 14b existing in the horizontal direction, the collapse load can be stabilized regardless of changes in the interference of the respective engaging portions 14a and 14b. Also strength against the bending force in the vertical direction can be increased. Moreover, since the area of the engaging portions 14a existing in the vertical direction is large, the surface pressure acting respectively on the respective engaging portions 14a in the vertical direction decreases, and the durability of the respective engaging portions 14a in the vertical direction against the bending force can be improved (they become unlikely to plastically deform). Thus, since they are unlikely to plastically deform with respect to a load based on the bending force at the time of a collision, a stable collapse load can be obtained. Furthermore, in the case of the present example, since the strength with respect to the bending force can be increased without increasing the axial direction dimension of the overlap portion 13, a collapse stroke of the steering wheel column can be easily ensured. Moreover, in the case of the present example, since the respective engaging portions 14a and 14b are engaged through the spacer 23, the collapse load can be easily stabilized. However, the present example can be carried out without the spacer 23. Furthermore, the axial direction length dimension of the respective engaging portions 14a may be made greater instead of the circumferential direction length dimension of the respective engaging portions 14a. However, in this case, the collapse stroke cannot be easily ensured.

### Example 17

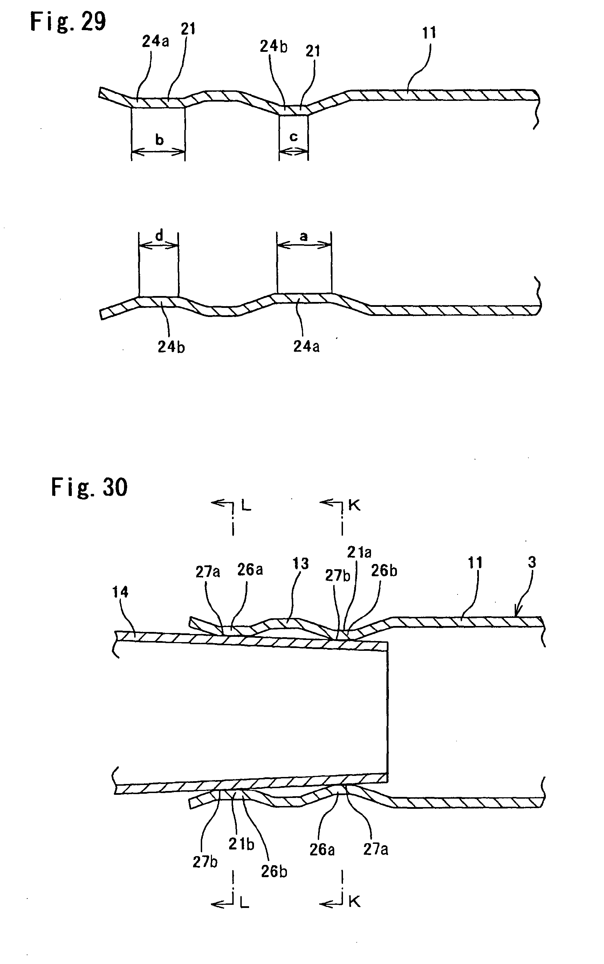

FIG. 29 shows Example 17 of the present invention. In the case of the present example, a pair of the deformed portions 21 separated from each other in the axial direction, is provided in the part where one part (left end portion in FIG. 29) of the outer column 11 is externally engaged with one end portion of the inner column (not shown in the diagram). In each of these deformed portions 21, outer engaging portions 24a and 24b, which constitute engaging portions in a state of external engagement with one end portion of the inner column, are formed. That is to say, each of these outer engaging portions 24a and 24b are respectively formed in a plurality of places positioned at even intervals around the circumferential direction on one end portion of the outer column 11. Then, in a state where the one end portion of the outer column 11 is externally engaged with the one end portion of the inner column, it engages with the outer circumference surface of one end portion of this inner column with interference. Moreover, for the outer engaging portions 24a and 24b, for example, the flat surfaces shown in FIG. 24 or the protrusions shown in FIG. 25 and FIG. 26 can be employed.

In particular, in the case of the present example, among the outer engaging portions 24a and 24b, the axial direction length dimensions of the outer engaging portions 24a and 24b positioned in the vertical direction (if not in the vertical direction, then in the vicinity of the vertical direction) in the installed state on a vehicle are regulated as follows. Specifically, among the engaging portions of the outer column 11 and the inner column 12, the axial direction length dimensions a and b of the outer engaging portions 24a, which constitute the engaging portions positioned in the part on which the bending force acts at the time of a collision, is respectively made greater than the axial direction length dimensions c and d of the outer engaging portions 24b, which constitute the other engaging portions (a > c, b>d).

The example shown in the diagram is specifically described. In the case where the outer column 11 is incorporated into the shock absorbing steering column apparatus as shown in FIG. 14 and FIG. 15 described above to be installed on a vehicle, it is assumed that the steering wheel exists on the right hand side in FIG. 29 and is tilted in a direction that goes up going towards the right in FIG. 29. In this case, the bending force that acts at the time of a collision acts from the outer column 11 to the inner column in the counterclockwise direction in FIG. 29. As a result, this bending force acts respectively on the engaging portion that is constituted by the lower outer engaging portion 24a in the deformed portion 21 on the right hand side in FIG. 29, and on the engaging portion that is constituted by the upper outer engaging portion 24a in the deformed portion 21 on left hand side in FIG. 29. Therefore, the axial direction length dimensions a and b of the outer engaging portions 24a which constitute the respective engaging portions positioned in the part on which the bending force acts, are respectively made greater than the axial direction length dimensions c and d of the outer engaging portions 24b which constitute the other engaging portions (a > c, b > d). As a result, in a state where the one end portion of the outer column 11 is externally engaged with the one end portion of the inner column, the axial direction length dimension of the engaging portions constructed by the respective outer engaging portions 24a can be made greater than the axial direction length dimension of the engaging portions constructed by the other outer engaging portions 24b.

In the case of the present example constructed as described above, among the engaging portions of the one end portion of the outer column 11 and the one end portion of the inner column 12, since the axial direction length dimension of the engaging portions positioned in the part on which the bending force acts at the time of a collision is greater than the axial direction length dimension of the other engaging portions, the collapse load can be stabilized regardless of changes in the interference of the respective engaging portions. Moreover, the respective engaging portions are unlikely to be deformed at the time of a collision, and contraction of the steering column can be performed stably (smoothly). Since the area of the engaging portions positioned in the part on which the bending force acts can be made large, the surface pressure which acts respectively on each of these engaging portions decreases, and durability of the respective engaging portions with respect to bending force is improved (plastic deformation is unlikely to occur). Thus, since they are unlikely to plastically deform with respect to a load based on the bending force that acts at the time of a collision, a stable collapse load can be obtained.

In the case of the present example, the collapse stroke cannot be easily ensured since the axial direction length dimension of the engaging portions is made longer. However, sufficient strength with respect to the bending force that acts at the time of a collision can be ensured easily. Therefore, the structure of the present example is preferably applied to a structure in which the axial direction dimension of the steering column can be sufficiently ensured while the strength with respect to the bending force that acts at the time of a collision needs to be increased.

### Example 18

FIG. 30 to FIG. 32 show Example 18 of the present invention. Also in the case of the present example, in a state where the steering column 3 has been installed on a vehicle, it is assumed that the steering column exists in the right direction in FIG. 30 and is tilted in the direction that goes up going towards the right. Therefore, also in the case of the present example, the bending force that acts at the time of a collision acts from the outer column 11 to the inner column 12 in the counterclockwise direction in FIG. 30. Moreover, in the case of the present example, deformed portions 21a and 21b having outer engaging portions 26a and 26b are respectively provided in two positions separated from each other in the axial direction on one end portion (left end portion in FIG. 30) of the outer column 11, which constitutes the steering column 3. The cross-section of each of these deformed portions 21 a and 21 b is substantially oval shaped, and their vertical direction dimension in a state of installation on a vehicle is made small. The parts of the respective deformed portions 21a and 21b existing in the vertical direction are formed (and radius of curvature thereof is changed) so as to follow along the outer circumference surface of the inner column 12, to be the respective outer engaging portions 26a and 26b.

In a state where the one end portion of the outer column 11 is externally engaged with one end portion of the inner column 12 (right end portion in FIG. 30), the outer engaging portions 26a and 26b engage with the outer circumference surface of the one end portion of the inner column 12 with interference, thus constituting the engaging portions 27a and 27b. Therefore, as described above, in the case where the bending force acts in the counterclockwise direction in FIG. 30, this bending force acts respectively on the engaging portion 27a constructed by the lower outer engaging portion 26a in the deformed portion 21 a on the right hand side in FIG. 30, and the engaging portion 27a constructed by the upper outer engaging portion 26a in the deformed portion 21b on the left hand side in FIG. 30.

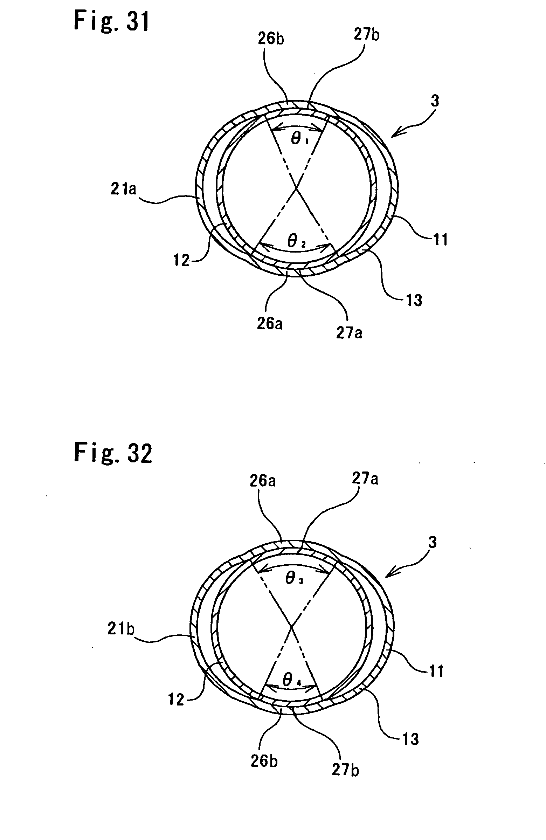

In particular, in the case of the present example, the circumferential direction length dimensions of the respective engaging portions 27a and 27b are regulated as follows. Specifically, with regards to the deformed portion 21a on the steering wheel side (right hand side in FIG. 30) of the steering column 3, as shown in FIG. 31, the circumferential direction length dimension of the lower engaging portion 27a is made greater than the circumferential direction length dimension of the upper engaging portion 27b. On the other hand, with regards to the deformed portion 21 b on the opposite side of the steering wheel (left hand side in FIG. 30) of the steering column 3, as shown in FIG. 32, the circumferential direction length dimension of the upper engaging portion 27a is made greater than the circumferential direction length dimension of the lower engaging portion 27b. Therefore in the case of the present example, angles θ₁ to θ₄ between the imaginary lines, which connect both circumferential direction end periphery parts of the outer engaging portions 26a and 26b that constitute the respective engaging portions 27a and 27b and the center of the outer column 11, are regulated as described below.

Specifically, the angle θ₁ about the upper outer engaging portion 26b of the deformed portion 21 a on the steering wheel side is made smaller than the angle θ₂ about the lower outer engaging portion 26a (θ₁ < θ₂). Meanwhile, the angle θ₃ about the upper outer engaging portion 26a of the deformed portion 21 b on the opposite side of the steering wheel is made greater than the angle θ₄ about the lower outer engaging portion 26b (θ₃ > θ₄). In the case where the respective outer engaging portions 26a and 26b constructed as described above are externally engaged with the outer circumference surface of the one end portion of the inner column 12, the engaging portions 27a and 27b having the predetermined circumferential direction length dimensions described above can be obtained. Moreover, in the example shown in the diagram, the part internally engaged with the outer column 11 on the one end portion of the inner column 12 has a tapered shape. However, this part may be formed in a simple cylindrical shape (external diameter does not change in the axial direction).

Also in the case of the present example constructed as described above, as with Example 17 shown in FIG. 29, the strength against the bending force that acts at the time of a collision can be sufficiently increased. That is to say, also in the case of the present example, the engaging portions positioned in the part on which the bending force acts at the time of a collision are the lower engaging portion 27a with regards to the deformed portion 21 a, and the upper engaging portion 27a with regards to the deformed portion 21b. Therefore, by making the circumferential direction length dimensions of the respective engaging portions 27a greater than the circumferential direction length dimensions of the other engaging portions 27b, the strength against the bending force can be sufficiently increased. As a result, the respective engaging portions 27a and 27b are unlikely to be bent by the bending force that acts at the time of a collision, and steering column contraction can be performed stably (smoothly). Moreover, since the circumferential direction length dimensions of the respective engaging portions 27a are increased in order to increase the strength against the bending force that acts at the time of a collision, the axial direction dimension of the overlap portion 13 of the outer column 11 and the inner column 12 does not increase, and the collapse stroke of the steering column can be easily ensured. Other structures and effects are similar to Example 17 described above.

Furthermore, in Example 17 and Example 18, the case where the steering wheel exists on the outer column 11 side is described. However, even in the case where the steering wheel exists on the inner column 12 side, the structures of the respective Examples 17 to 18 can be applied. To specifically describe with reference to FIG. 30, in the case where the steering wheel exists on left hand side in FIG. 30 and the steering column 3 is installed in a state of being tilted in the direction that goes up going towards the left in FIG. 30, the bending force that acts at the time of a collision acts from the inner column 12 to the outer column 11 in the clockwise direction in FIG. 30. Accordingly, the engaging portion on which this bending force acts is the lower engaging portion 27a with respect to the deformed portion 21a on right hand side in FIG. 30 and is the upper engaging portion 27a with respect to the deformed portion 21b on left hand side in FIG. 30. As a result, as with the respective Examples 17 to 18, if the axial direction length dimensions or circumferential direction length dimensions of the respective engaging portions 27a positioned in the part on which the bending force acts are made greater, strength against the bending force can be sufficiently increased.

Furthermore, in the respective examples described above, the case where the engaging portions are positioned in the vertical direction is described. However, the present invention can also be applied to the case where the engaging portions do not exist in the vertical direction. That is to say, among the plurality of the engaging portions positioned at even intervals around the circumferential direction in one part of the overlap portion of the outer column and the inner column, if the respective examples described above are applied to the engaging portions existing in the vicinity of the vertical direction, the same effect can also be obtained. Here, the vicinity in the vertical direction means that the central position of the engaging portion exists within a range of respectively 10° or less in the circumferential direction on both sides of the vertical direction (a range of 20° in total). Specifically, it means that the angle between an imaginary line which connects a central part of the engaging portion in the circumferential direction and the center of the steering column, and an imaginary line in the vertical direction which passes through the center of the steering column, is within a range of 10° or less.

Furthermore, each of the inventions described above can be respectively appropriately combined to be executed. That is to say, the area (axial direction dimension or circumferential direction dimension) of the engaging portion positioned in the vertical direction or positioned in the vicinity in the vertical direction in the installed state on a vehicle is made greater (large), and the interference is made greater. For example, in the structure of Example 16 shown in FIG. 28 described above, in addition to regulating the circumferential direction length dimensions of the engaging portions 14a and 14b, the interference of the engaging portions 14a existing in the vertical direction is made greater than the interference of the engaging portions 14b existing in the horizontal direction.

Moreover, the interference or area (axial direction dimension or circumferential direction dimension) of the engaging portions positioned in the vertical direction, or positioned in the vicinity of this vertical direction, in the installed state on a vehicle, is made greater or larger, and the area of the engaging portions positioned in the part upon which the bending force acts in the event of a collision can be made larger. For example, in the structure of Example 17 shown in FIG. 29 described above, in addition to increasing the axial direction length dimension of the engaging portions positioned in the part upon which the bending force acts at the time of a collision, among the engaging portions provided in two positions separated from each other in the axial direction, the interference of the engaging portions positioned in the vertical direction is increased. That is to say, the axial direction dimension of the outer engaging portions 24a which constitutes the engaging portion upon which the bending force acts is increased, and among the respective engaging portions, the extent of protrusion of the outer engaging portions 24a and 24b which constitute the engaging portions positioned in the vertical direction are respectively made greater than the extent of protrusion of the outer engaging portions which constitute the other engaging portions. According to such a construction, a shock absorbing steering column apparatus can be obtained in which the strength against the bending force in the vertical direction can be made greater, and deformation due to the bending force that acts in the event of a collision is unlikely to occur.

## Claims

1. A shock absorbing steering column apparatus provided with; an outer column one part of which in the axial direction thereof is fixed by welding to a bracket, so that the outer column is supported on a vehicle body by means of the bracket; and an inner column one end portion of which is inserted into the inside of one end portion of the outer column; and in the case where a large load in the axial direction is applied between the outer column and the inner column, the dimension in the axial direction is made contractible by means of a mutual shift in the relative positions of the outer column and the inner column in the axial direction, wherein
engaging portions that have interference are provided in one part in the circumferential direction of an overlap portion where the outer column and the inner column overlap in the radial direction, and a position of the bracket is matched in relation to the axial direction with the overlap portion, and a welding place of the bracket and the outer column is in a position separated from the engaging portions of the overlap portion.

2. A shock absorbing steering column apparatus according to claim 1, wherein the place where the bracket and the outer column are welded, is positioned furthest in the circumferential direction from the engaging portion of the overlap portion.

3. A shock absorbing steering column apparatus according to claim 1, wherein the engaging portions that have interference are provided in a plurality of positions around the circumferential direction in the overlap portion in which the outer column and the inner column overlap in the radial direction, and in the case where it is assumed that the overlap portion is divided into two in a diametric direction, each of the engaging portions exists in a state biased towards a position away from the divided section, and the place where the bracket and the outer column are welded, is in the vicinity of the engaging portion existing on one of the sides of the overlap portion which is assumed to have been divided.

4. A shock absorbing steering column apparatus provided with; an outer column one part of which in the axial direction thereof is fixed by welding to a bracket, so that the outer column is supported on a vehicle body by means of the bracket; and an inner column one end portion of which is inserted into the inside of one end portion of the outer column; and in the case where a large load in the axial direction is applied between the outer column and the inner column, the dimension in the axial direction is made contractible by means of a mutual shift in the relative positions of the outer column and the inner column in the axial direction, wherein
engaging portions that have interference are provided in a plurality of positions around the circumferential direction in an overlap portion in which the outer column and the inner column overlap in the radial direction, and in the case where it is assumed that the overlap portion is divided into two in a diametric direction, each of the engaging portions exists in a state biased towards a position away from the divided section, and the position of the bracket is matched in the axial direction with the overlap portion, and the place where the bracket and the outer column are welded, is on the engaging portion existing on one of the sides of the overlap portion which is assumed to have been divided.

5. A shock absorbing steering column apparatus according to any one of claim 1 through claim 4, wherein at each of the parts where the engaging portions exist in relation to the axial direction of the overlap portion, each of the engaging portions is respectively provided in two places in relation to the circumference direction, and each of the engaging portions is arranged in symmetry about the central axis of the outer column.

6. A shock absorbing steering column apparatus according to either one of claim 3 and claim 4, wherein the respective engaging portions exist unevenly in relation to the circumferential direction.

7. shock absorbing steering column apparatus according to claim 6, wherein the engaging portions exist in four places in relation to the circumferential direction, and an interval in relation to the circumferential direction between engaging portions that exist astride an imaginary line orthogonal to the direction of division is made smaller than an interval in relation to the circumferential direction between engaging portions that exist astride an imaginary line in the direction of division.

8. A shock absorbing steering column apparatus according to claim 6, wherein the engaging portions exist in three places in relation to the circumferential direction, and two of the places are disposed on one side in the case where a division is assumed to have been made, astride an imaginary line orthogonal to the direction of division, and the other one place is disposed on the other side of the division on the imaginary line orthogonal to the direction of division, and an interval in the circumferential direction between the engaging portions at the two places is made smaller than the respective intervals in the circumferential direction between the engaging portions in these two places and the engaging portion in the other one place.

9. A shock absorbing steering column apparatus according to any one of claim 1 through claim 8, wherein at least one member of the outer column and the inner column is a base pipe on which surface a finishing process has not been carried out.

10. An electric power steering apparatus provided with: a steering shaft, on the rear end of which a steering wheel is fixed; a steering column through which the steering shaft can be freely inserted; and an electric motor that imparts a force to the steering shaft in a rotational direction according to the flow of current, wherein the steering column is a shock absorbing steering column apparatus according to any one of claim 1 through claim 9.

11. A shock absorbing steering column apparatus provided with; an outer column, and an inner column one end portion of which is inserted into the inside of one end portion of the outer column; and in the case where a large load in the axial direction is applied between the outer column and the inner column, the dimension in the axial direction is made contractible by means of a mutual shift in the relative positions of the outer column and the inner column in the axial direction, wherein
engaging portions that have interference are provided in a plurality of positions around the circumferential direction in an overlap portion in which the outer column and the inner column overlap in the radial direction, and each of the engaging portions is arranged unevenly in relation to the circumferential direction.

12. A shock absorbing steering column apparatus according to claim 11, wherein the interference of the respective engaging portions is made uneven.

13. A shock absorbing steering column apparatus according to claim 11, wherein the arrangements of the respective engaging portions are biased in the vertical direction in an installed state.

14. A shock absorbing steering column apparatus according to either one of claim 12 and claim 13, wherein among the engaging portions, the interference of the engaging portions arranged in positions biased in the vertical direction in the assembled state is made larger than the interference of the engaging portions arranged in other positions.

15. A shock absorbing steering column apparatus according to any one of claim 11 through claim 14, wherein the engaging portions positioned unevenly with respect to the circumferential direction respectively exist in positions separated in the axial direction of the overlap portion of the outer column and the inner column, and of each of the engaging portions, the number of engaging portions upon which the bending force acts at the time of a collision is made to be greater than the number of the other engaging portions.

16. A shock absorbing steering column apparatus according to any one of claim 11 through claim 15, wherein the engaging portions positioned unevenly with respect to the circumferential direction respectively exist in positions separated in the axial direction of the overlap portion of the outer column and the inner column, and of each of the engaging portions, the area of the engaging portions on which the bending force acts at the time of a collision is made greater than the area of the other engaging portions.

17. A shock absorbing steering column apparatus according to claim 16, wherein an axial direction dimension of the engaging portion on which the bending force acts at the time of a collision is made greater than the axial direction dimension of the other engaging portions.

18. A shock absorbing steering column apparatus according to any one of claim 11 through claim 17, wherein the engaging portions are constructed by forming protrusions in a plurality of positions around the circumferential direction of the member of either one of the outer column and the inner column, and engaging the respective protrusions with the other member in a state having interference.

19. A shock absorbing steering column apparatus according to any one of claim 11 through claim 18, wherein a spacer manufactured from low friction material is arranged between an inner circumference surface of the outer column and an outer circumference surface of the inner column, so that the respective engaging portions are engaged through the spacer.

20. A shock absorbing steering column apparatus according to any one of claim 11 through claim 18, wherein at least one of the circumference surfaces of the inner circumference surface of the outer column and the outer circumference surface of the inner column is subjected to low friction surface treatment on the part where it engages with the other circumference surface.

21. An electric power steering apparatus provided with: a steering shaft, on the rear end of which a steering wheel is fixed; a steering column through which the steering shaft can be freely inserted; and an electric motor that imparts a force to the steering shaft in a rotational direction according to the flow of current, wherein the steering column is a shock absorbing steering column apparatus according to any one of claim 11 through claim 20.

22. A shock absorbing steering column apparatus provided with; an outer column, and an inner column one end portion of which is inserted into the inside of one end portion of the outer column; and in the case where a large load in the axial direction is applied between the outer column and the inner column, the dimension in the axial direction is made contractible by means of a relative shift in the relative positions of the outer column and the inner column in the axial direction, wherein
engaging portions that have interference are provided in a plurality of places positioned at even intervals in relation to the circumferential direction, in one part of an overlap portion where the one end portion of the outer column and the one end portion of the inner column overlap in the radial direction, and among the respective engaging portions, the interference of the engaging portions positioned in the vertical direction or positioned in the vicinity of the vertical direction in an installed state on a vehicle, is greater than the interference of the other engaging portions.

23. A shock absorbing steering column apparatus provided with; an outer column, and an inner column one end portion of which is inserted into the inside of one end portion of the outer column; and in the case where a large load in the axial direction is applied between the outer column and the inner column, the dimension in the axial direction is made contractible by means of a relative shift in the relative positions of the outer column and the inner column in the axial direction, wherein
engaging portions that have interference are provided in a plurality of places positioned at even intervals in relation to the circumferential direction, in one part of an overlap portion where the one end portion of the outer column and the one end portion of the inner column overlap in the radial direction, and among the respective engaging portions, the surface area of the engaging portions positioned in the vertical direction or positioned in the vicinity of the vertical direction in an installed state on a vehicle, is greater than the surface area of the other engaging portions.

24. A shock absorbing steering column apparatus according to claim 23, wherein an axial direction length dimension of the engaging portions positioned in the vertical direction or positioned in the vicinity of the vertical direction in an installed state on a vehicle, is made greater than the axial direction length dimension of the other engaging portions.

25. A shock absorbing steering column apparatus according to either one of claim 23 and claim 24, wherein a circumferential direction length dimension of the engaging portions positioned in the vertical direction or positioned in the vicinity of the vertical direction in an installed state on a vehicle, is made greater than the circumferential direction length dimension of the other engaging portions.

26. A shock absorbing steering column apparatus according to any one of claim 23 through claim 25, wherein the interference of the engaging portions positioned in the vertical direction or positioned in the vicinity of this vertical direction in an installed state on a vehicle, is made greater than the interference of the other engaging portions.

27. A shock absorbing steering column apparatus according to any one of claim 22 through claim 26, wherein the engaging portions that each have interference are provided in a plurality of places positioned at even intervals in relation to the respective circumferential directions in two positions mutually separated in the axial direction in the overlap portion where one end portion of the outer column and one end portion of the inner column overlap in the radial direction, and of each of these engaging portions, the surface areas of the engaging portions positioned in the part upon which the bending force acts at the time of a collision, are made greater than the surface areas of other engaging portions.

28. A shock absorbing steering column apparatus provided with; an outer column, and an inner column one end portion of which is inserted into the inside of one end portion of the outer column; and in the case where a large load in the axial direction is applied between the outer column and the inner column, the dimension in the axial direction is made contractible by means of a relative shift in the relative positions of the outer column and the inner column in the axial direction, wherein
engaging portions that each have interference are provided in a plurality of places positioned at even intervals in relation to the respective circumferential directions in two positions mutually separated in the axial direction in an overlap portion where the one end portion of the outer column and the one end portion of the inner column overlap in the radial direction, and of each of these engaging portions, the surface areas of the engaging portions positioned in the part upon which the bending force acts at the time of a collision, are made greater than the surface areas of other engaging portions.

29. A shock absorbing steering column apparatus according to either one of claim 27 and claim 28, wherein an axial direction length dimension of the engaging portions positioned in the part upon which the bending force acts at the time of a collision, is made greater than an axial direction length dimension of the other engaging portions.

30. A shock absorbing steering column apparatus according to any one of claim 27 through claim 29, wherein a circumferential direction length dimension of the engaging portions positioned in the part upon which the bending force acts at the time of a collision, is made greater than a circumferential direction length dimension of the other engaging portions.

31. A shock absorbing steering column apparatus according to any one of claim 22 through claim 30, wherein the engaging portions are constructed by forming protrusions which project in the radial direction, in a plurality of positions around the circumferential direction of the member of either one of the outer column and the inner column, and engaging these respective protrusions with the other member in a state having interference.

32. A shock absorbing steering column apparatus according to any one of claim 22 through claim 31, wherein a spacer manufactured from low friction material is arranged between an inner circumference surface of the outer column and an outer circumference surface of the inner column, so that the respective engaging portions are engaged through the spacer.

33. A shock absorbing steering column apparatus according to any one of claim 22 through claim 31, wherein at least one of the circumference surfaces of the inner circumference surface of the outer column and the outer circumference surface of the inner column are subjected to low friction surface treatment on the part where it engages with the other circumference surface.

34. An electric power steering apparatus provided with: a steering shaft, on the rear end of which a steering wheel is fixed; a steering column through which this steering shaft can be freely inserted; and an electric motor that imparts a force to this steering shaft in a rotational direction according to the flow of current, wherein the steering column is a shock absorbing steering column apparatus according to any one of claim 22 through claim 33.
